# EUROPEAN PATENT APPLICATION

(11) **EP 4 842 072 A1**
(43) Date of publication of application: **18.11.2026**
(21) Application number: 25751704.5
(22) Date of filing: 08.02.2025
(51) Int. Cl.: H04W 48/16

(54) **COMMUNICATION METHOD AND APPARATUS**

(30) Priority: 08.02.2024 CN 202410178202
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN); SHI, Yulong, Shenzhen, Guangdong 518129 (CN); SHEN, Zhongyi, Shenzhen, Guangdong 518129 (CN); WANG, Rui, Shenzhen, Guangdong 518129 (CN)
(74) Representative: Pfenning, Meinig & Partner mbB
(86) International application number: PCT/CN2025/076419
(87) International publication number: WO 2025/168094

(57) **Abstract**

This application discloses a communication method and apparatus. The method includes: A first apparatus receives a first downlink message and a second downlink message from a second apparatus, where the first downlink message is used to confirm successful access of the first apparatus or to trigger an access occasion of the first apparatus, the second downlink message is used to confirm successful access of a third apparatus or to trigger an access occasion of the third apparatus, the first downlink message is associated with a first time unit, the second downlink message is associated with a second time unit, and the second time unit is a time unit in which the third apparatus sends a second uplink message to the second apparatus; and the first apparatus sends a first uplink message to the second apparatus in the first time unit. According to the foregoing method, when time units respectively associated with a plurality of downlink messages are different, a plurality of uplink messages in response to the plurality of downlink messages are sent in different time units, thereby reducing collisions among the plurality of uplink messages and improving access efficiency. The second apparatus may send a plurality of downlink messages confirming successful access of apparatuses having a tag function, thereby further improving access efficiency.

## Description

### CROSS-REFERENCE TO RELATED APPLICATIONS

This application claims priority to Chinese Patent Application No. 202410178202.9, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Tags can be applied to a plurality of industries and fields. As a typical application, logistics management is implemented by inventorying physical tags. Tag inventory requires tags to access a network. After each tag accesses the network randomly, the tag may report its identifier to a reader. In this way, the reader can determine the existence of tags within its coverage area.

Currently, an access network device having a reader function may send a query repetition message to tags to trigger the tags to access the network. After receiving the query repetition message, each tag may send a random number to the access network device in response. One query repetition message may trigger a plurality of tags to send random numbers, and collisions may occur among the random numbers sent by the plurality of tags. As a result, all of the tags fail to access the network, leading to low access efficiency. If the random numbers sent by the plurality of tags do not collide, after identifying the random numbers, the access network device sends an acknowledgment message to only one tag, allowing only one tag to access the network. As a result, other tags all fail to access the network, and the access efficiency remains low.

### SUMMARY

Embodiments of this application provide a communication method and apparatus to improve access efficiency.

According to a first aspect, an embodiment of this application provides a communication method. The method may be applied to a first apparatus, and the first apparatus is a terminal device having a tag function or a component (for example, a unit/module, a circuit, or a chip) in a terminal device. The method includes: receiving a first downlink message and a second downlink message from a second apparatus, where the first downlink message is used to confirm successful access of the first apparatus or to trigger an access occasion of the first apparatus, the second downlink message is used to confirm successful access of a third apparatus or to trigger an access occasion of the third apparatus, the first downlink message is associated with a first time unit, the second downlink message is associated with a second time unit, and the second time unit is a time unit in which the third apparatus sends a second uplink message to the second apparatus; and sending a first uplink message to the second apparatus in the first time unit.

In the foregoing method, the first apparatus and the third apparatus have a tag function, and the second apparatus has a reader function. One downlink message sent by the second apparatus may be associated with one time unit. After receiving the downlink message, the first apparatus may send an uplink message in the time unit, to respond to the downlink message. According to the foregoing method, when time units respectively associated with a plurality of downlink messages are different, a plurality of uplink messages in response to the plurality of downlink messages are sent in different time units, thereby reducing collisions among the plurality of uplink messages and improving access efficiency. In addition, the second apparatus may send a plurality of downlink messages confirming successful access of apparatuses having a tag function, that is, the second apparatus allows access of a plurality of apparatuses (for example, the first apparatus or the third apparatus) having the tag function, thereby further improving the access efficiency.

In a possible implementation, the first downlink message and the second downlink message include one or more of the following: first time information, where the first time information is used to determine the first time unit; second time information, where the first time information is used to determine the second time unit; third time information, where the third time information is related to first configuration information, and the first configuration information is used by the first apparatus to send an uplink message to the second apparatus and used by the third apparatus to send an uplink message to the second apparatus; the first configuration information, where the first configuration information is used by the first apparatus to send the uplink message to the second apparatus and used by the third apparatus to send the uplink message to the second apparatus; and a first value, where the first value is a maximum value of a first duration indicated by the first time information and a maximum value of a second duration indicated by the second time information.

In this implementation, a plurality of manners in which the second apparatus indicates the first time unit associated with the first downlink message and the second time unit associated with the second downlink message are provided. For example, the first time message that can be used to determine the first time unit and the second time message that can be used to determine the second time unit are directly indicated. For another example, the third time message that can be used to determine the first time message and the second time message is directly indicated, or the first value that can be used to determine the first time message and the second time message is directly indicated, or the first configuration information that can be used to determine the first time message and the second time message is directly indicated. In this way, a manner in which the first apparatus determines the first time unit associated with the first downlink message, and the third apparatus determines the second time unit associated with the second downlink message is more flexible.

In a possible implementation, the method further includes: determining the first time information based on the third time information or the first configuration information and an order in which the first apparatus receives the first downlink message and the second downlink message from the second apparatus, where the third time information is related to the first configuration information, and the first configuration information is used by the first apparatus to send the uplink message to the second apparatus; and determining the first time unit based on the first time information.

In this implementation, a manner in which the first apparatus determines and indicates the first time unit associated with the first downlink message is provided. For example, the first time message is determined based on the third time message or the first configuration information and the order in which the first apparatus receives the first downlink message and the second downlink message (for example, the first downlink message is received before the second downlink message, and a third duration indicated by the third time message is equal to the first duration indicated by the first time message; or the first downlink message is received after the second downlink message, and twice a third duration indicated by the third time message is equal to the first duration indicated by the first time message), and the first time unit is determined based on the first time message.

In a possible implementation, the method further includes: determining the first time information based on the third time information or the first configuration information and a second value, where the third time information is related to the first configuration information, the first configuration information is used by the first apparatus to send the uplink message to the second apparatus, the second value is less than or equal to the first value, and the first value is the maximum value of the first duration indicated by the first time information; and determining the first time unit based on the first time information.

In this implementation, a manner in which the first apparatus determines and indicates the first time unit associated with the first downlink message is provided. For example, the first time message is determined based on the third time message or the first configuration information and the second value (for example, a product of the third duration indicated by the third time message and the second value is equal to the first duration indicated by the first time message), and the first time unit is determined based on the first time message.

In a possible implementation, determining the first time unit based on the first time information includes: determining the first time unit based on the first time information and a third time unit, where the third time unit is a time unit in which the first apparatus receives the first downlink message from the second apparatus or a time unit in which the first apparatus receives the first downlink message and the second downlink message from the second apparatus.

In this implementation, a manner in which the first apparatus determines, based on the first time message, the first time unit associated with the first downlink message is provided. For example, the first duration indicated by the first time information is equal to a duration between the third time unit and the first time unit.

In a possible implementation, the first downlink message is used to confirm successful access of the first apparatus, and the first uplink message is used to transmit uplink data of the first apparatus; or the first downlink message is used to trigger the access occasion of the first apparatus, and the first uplink message is used to request access of the first apparatus. In this implementation, a plurality of first uplink messages in response to the first downlink message are provided.

In a possible implementation, the second downlink message is used to confirm successful access of the third apparatus, and the second uplink message is used to transmit uplink data of the third apparatus; or the second downlink message is used to trigger the access occasion of the third apparatus, and the second uplink message is used to request access of the third apparatus. In this implementation, a plurality of second uplink messages in response to the second downlink message are provided.

In a possible implementation, the first downlink message and the second downlink message are a same message.

In this implementation, the second apparatus may send the first downlink message and the second downlink message together, thereby reducing overheads.

In a possible implementation, the first downlink message and the second downlink message include one or more of the following: a number of a first process, where the number of the first process is associated with the first apparatus; and a number of a second process, where the number of the second process is associated with the third apparatus.

In this implementation, the first apparatus may respond only to the first downlink message that is from the second apparatus and that carries the number of the first process associated with the first apparatus, and the third apparatus may respond only to the second downlink message that is from the second apparatus and that carries the number of the second process associated with the third apparatus. If the second apparatus sends, within a processing duration for processing an uplink message, a downlink message carrying a number of another process, the first apparatus and the third apparatus do not respond to the downlink message. In this way, the second apparatus can implement multi-process processing, thereby reducing impact of the processing duration for processing the uplink message by the second apparatus, and improving an access rate.

According to a second aspect, an embodiment of this application further provides a communication method. The method may be applied to a second apparatus. The second apparatus may be a network device having a reader function or a component (for example, a unit/module, a circuit, or a chip) in a network device, or may be a terminal device having a reader function or a component (for example, a unit/module, a circuit, or a chip) in a terminal device. The method includes: sending a first downlink message and a second downlink message, where the first downlink message is used to confirm successful access of a first apparatus or to trigger an access occasion of the first apparatus, the second downlink message is used to confirm successful access of a third apparatus or to trigger an access occasion of the third apparatus, the first downlink message is associated with a first time unit, and the second downlink message is associated with a second time unit; and receiving a first uplink message from the first apparatus in the first time unit, and receiving a second uplink message from the third apparatus in the second time unit.

In a possible implementation, the first downlink message and the second downlink message include one or more of the following: first time information, where the first time information is used to determine the first time unit; second time information, where the first time information is used to determine the second time unit; third time information, where the third time information is related to first configuration information, and the first configuration information is used by the first apparatus to send an uplink message to the second apparatus and used by the third apparatus to send an uplink message to the second apparatus; the first configuration information, where the first configuration information is used by the first apparatus to send the uplink message to the second apparatus and used by the third apparatus to send the uplink message to the second apparatus; and a first value, where the first value is a maximum value of a first duration indicated by the first time information and a maximum value of a second duration indicated by the second time information.

In a possible implementation, the method further includes: the third time information or the first configuration information and an order in which the first apparatus receives the first downlink message and the second downlink message from the second apparatus are used to determine the first time information, and the third time information or the first configuration information and an order in which the third apparatus receives the first downlink message and the second downlink message from the second apparatus are used to determine the second time information; and the third time information is related to the first configuration information, the first configuration information is used by the first apparatus to send the uplink message to the second apparatus, the first time information is used to determine the first time unit, and the second time information is used to determine the second time unit.

In a possible implementation, the method further includes: the third time information or the first configuration information and a second value are used to determine the first time information, and the third time information or the first configuration information and a third value are used to determine the second time information; and the third time information is related to the first configuration information, the first configuration information is used by the first apparatus to send the uplink message to the second apparatus, the second value is less than or equal to the first value, the third value is less than or equal to the first value, the first value is the maximum value of the first duration indicated by the first time information, the first time information is used to determine the first time unit, and the second time information is used to determine the second time unit.

In a possible implementation, the first time information and a third time unit are used to determine the first time unit, and the second time information and a fourth time unit are used to determine the second time unit; and the third time unit is a time unit in which the first apparatus receives the first downlink message from the second apparatus or a time unit in which the first apparatus receives the first downlink message and the second downlink message from the second apparatus, and the fourth time unit is a time unit in which the third apparatus receives the second downlink message from the second apparatus or a time unit in which the third apparatus receives the first downlink message and the second downlink message from the second apparatus.

In a possible implementation, the first downlink message is used to confirm successful access of the first apparatus, and the first uplink message is used to transmit uplink data of the first apparatus; or the first downlink message is used to trigger the access occasion of the first apparatus, and the first uplink message is used to request access of the first apparatus.

In a possible implementation, the second downlink message is used to confirm successful access of the third apparatus, and the second uplink message is used to transmit uplink data of the third apparatus; or the second downlink message is used to trigger the access occasion of the third apparatus, and the second uplink message is used to request access of the third apparatus.

In a possible implementation, the first downlink message and the second downlink message are a same message.

In a possible implementation, the first downlink message and the second downlink message include one or more of the following: a number of a first process, where the number of the first process is associated with the first apparatus; and a number of a second process, where the number of the second process is associated with the third apparatus.

For beneficial effect of the second aspect and the implementations of the second aspect, refer to the beneficial effect of the first aspect and any implementation of the first aspect.

According to a third aspect, an embodiment of this application provides a communication apparatus, including a processor and a memory. The memory is configured to store computer instructions. When the apparatus runs, the processor executes the computer instructions stored in the memory, so that the apparatus performs any implementation method in the first aspect or the second aspect. The memory may be a volatile or non-volatile memory, for example, a cache in a semiconductor chip.

According to a fourth aspect, an embodiment of this application provides a communication apparatus. The apparatus may be a terminal device or a network device, or may be a chip used in a terminal device or a network device. The apparatus has a function of implementing any implementation method in the first aspect or the second aspect. The function may be implemented by hardware, or may be implemented by hardware executing corresponding software. The hardware or the software includes one or more modules corresponding to the function.

According to a fifth aspect, an embodiment of this application provides a communication apparatus, including units or means (means) configured to perform the steps in any implementation method in the first aspect or the second aspect.

According to a sixth aspect, an embodiment of this application provides a communication apparatus, including a processor and an interface circuit. The processor is configured to: communicate with another apparatus through the interface circuit, and perform any implementation method in the first aspect or the second aspect. The processor may be one or more processors.

According to a seventh aspect, an embodiment of this application provides a communication apparatus, including a processor coupled to a memory. The processor is configured to invoke a program stored in the memory, to perform any implementation method in the first aspect or the second aspect. The memory may be located inside the apparatus, or may be located outside the apparatus. The processor may alternatively be one or more processors.

According to an eighth aspect, an embodiment of this application further provides a computer-readable storage medium. The computer-readable storage medium stores instructions. When the instructions are run on a communication apparatus, any implementation method in the first aspect or the second aspect is performed.

According to a ninth aspect, an embodiment of this application further provides a computer program product. The computer program product includes a computer program or instructions. When the computer program or the instructions are run by a communication apparatus, any implementation method in the first aspect or the second aspect is performed.

According to a tenth aspect, an embodiment of this application further provides a chip system, including a processor, configured to perform any implementation method in the first aspect or the second aspect.

According to an eleventh aspect, an embodiment of this application further provides a communication system. The system includes: a first apparatus, configured to perform any implementation method performed by the first apparatus in the first aspect or the second aspect; and a second apparatus, configured to perform any implementation method performed by the second apparatus in the first aspect or the second aspect.

### BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a diagram of still another communication system according to an embodiment of this application;
FIG. 4A and FIG. 4B are a diagram of still another communication system according to an embodiment of this application;
FIG. 5 is a diagram of a radio access network intelligent controller according to an embodiment of this application;
FIG. 6 is a diagram of an artificial intelligence module according to an embodiment of this application;
FIG. 7 is a schematic flowchart of performing a service between a tag and a network device according to an embodiment of this application;
FIG. 8 is another schematic flowchart of performing a service between a tag and a network device according to an embodiment of this application;
FIG. 9 is a schematic flowchart of a communication method according to an embodiment of this application;
FIG. 10 is a timing diagram of a first apparatus, a second apparatus, a third apparatus, and a fifth apparatus according to an embodiment of this application;
FIG. 11 is a schematic flowchart of another communication method according to an embodiment of this application;
FIG. 12 is a timing diagram of a first apparatus, a second apparatus, and a third apparatus according to an embodiment of this application;
FIG. 13 is a schematic flowchart of still another communication method according to an embodiment of this application;
FIG. 14 is another timing diagram of a first apparatus, a second apparatus, and a third apparatus according to an embodiment of this application;
FIG. 15 is a schematic flowchart of still another communication method according to an embodiment of this application;
FIG. 16A and FIG. 16B are still another timing diagram of a first apparatus, a second apparatus, and a third apparatus according to an embodiment of this application;
FIG. 17 is a schematic flowchart of still another communication method according to an embodiment of this application;
FIG. 18 is still another timing diagram of a first apparatus, a second apparatus, and a third apparatus according to an embodiment of this application;
FIG. 19 is a schematic flowchart of still another communication method according to an embodiment of this application;
FIG. 20 is still another timing diagram of a first apparatus, a second apparatus, and a third apparatus according to an embodiment of this application;
FIG. 21 is a schematic flowchart of still another communication method according to an embodiment of this application;
FIG. 22 is still another timing diagram of a first apparatus, a second apparatus, and a third apparatus according to an embodiment of this application;
FIG. 23 is a schematic flowchart of still another communication method according to an embodiment of this application;
FIG. 24 is still another timing diagram of a first apparatus, a second apparatus, and a third apparatus according to an embodiment of this application;
FIG. 25 is a diagram of a communication apparatus according to an embodiment of this application; and
FIG. 26 is a diagram of another communication apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

Technical solutions provided in embodiments of this application may be applied to an internet of things (internet of things, IoT) system. The IoT includes an ambient internet of things (ambient IoT, A-IoT), a narrowband internet of things (narrowband internet of things, NB-IoT), and the like. IoT technologies are widely applied to various industries and fields. For example, the IoT technologies may be applied to scenarios such as logistics, warehousing, industrial manufacturing, identity identification, or environment monitoring. The IoT is implemented based on a radio frequency identification (radio frequency identification, RFID) technology. The RFID technology is a contactless communication technology implemented in a radio frequency communication manner. A principle of the RFID technology is that data communication between a reader-writer/reader (reader) and a tag (tag) is implemented by using a radio wave without contact. The IoT technology may be applied to a communication system related to the 3rd generation partnership project (the 3rd generation partnership project, 3GPP), for example, a long term evolution (long term evolution, LTE) communication system or a 5th generation (the sixth generation, 5G) mobile communication system, or may be applied to another next-generation mobile communication system, for example, a sixth generation (6G) communication system, or another similar communication system. The another similar communication system may include a wireless fidelity (wireless fidelity, Wi-Fi) system, a vehicle-to-everything (vehicle-to-everything, V2X) system, and the like.

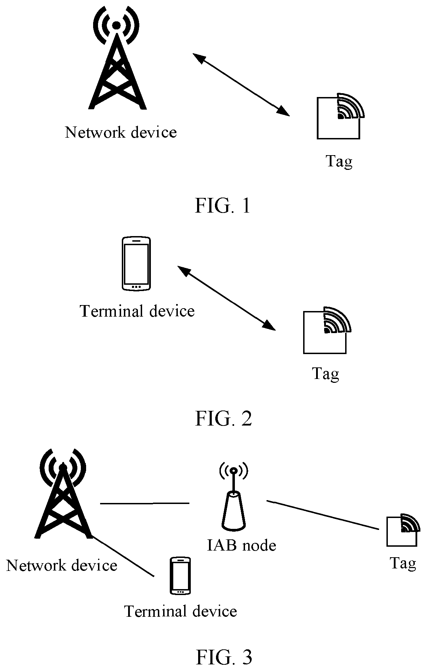

FIG. 1 is a diagram of a communication system according to an embodiment of this application. As shown in FIG. 1, the communication system includes a network device and a tag. The tag may be an independent device, or the tag may be integrated with a terminal device. In the communication system, the network device may have a function of a reader in an RFID system. To be specific, the network device may communicate with the tag as a reader, and the network device and the tag may communicate with each other through a Uu interface, that is, perform air interface communication.

FIG. 2 is a diagram of another communication system according to an embodiment of this application. As shown in FIG. 2, the communication system includes a terminal device and a tag. The tag may be an independent device, or the tag may be integrated with the terminal device. In the communication system, the terminal device may have a function of a reader in an RFID system. To be specific, the terminal device may communicate with the tag as a reader, and the terminal device and the tag may communicate with each other through a sidelink (sidelink, SL).

FIG. 3 is a diagram of still another communication system according to an embodiment of this application. As shown in FIG. 3, the communication system includes a network device, an integrated access and backhaul (integrated access and backhaul, IAB) node, and a tag. The communication system may further include another device, for example, include a device like a terminal device. In the communication system, the IAB node may serve as a relay node between the network device and the tag. The tag transmits information to the IAB node, and the IAB node forwards the information to the network device through a Uu interface.

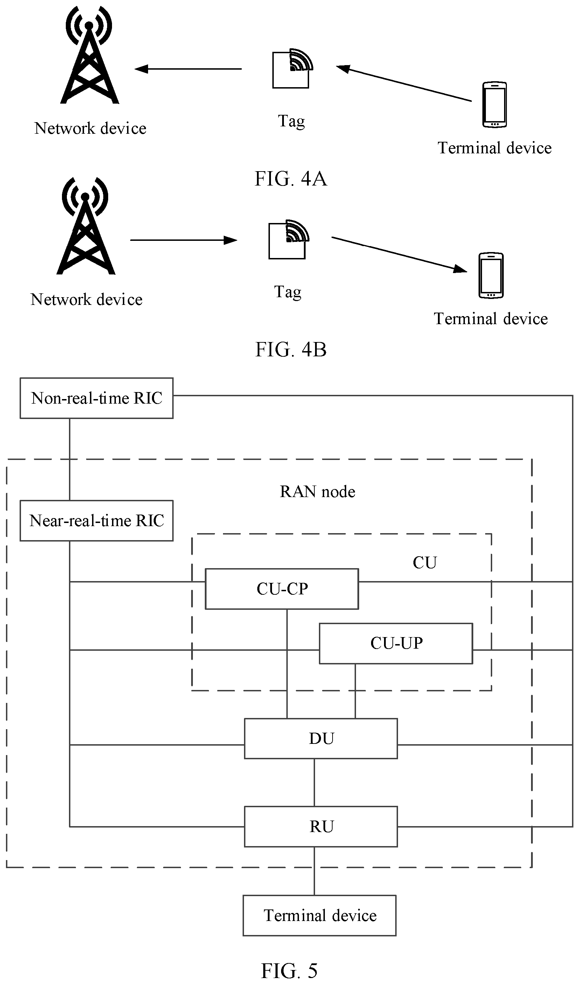

FIG. 4A and FIG. 4B are a diagram of still another communication system according to an embodiment of this application. As shown in FIG. 4A and FIG. 4B, the communication system includes a network device, a terminal device, and a tag, and the communication system is a system of a split architecture. In the communication system, in an implementation, as shown in FIG. 4A, the tag has only an uplink connection to the network device, and the tag has only a downlink connection to the terminal device. In this implementation, the terminal device may transmit information to the tag, and the tag forwards the information to the network device. In another implementation, as shown in FIG. 4B, the tag has only a downlink connection to the network device, and the tag has only an uplink connection to the terminal device. In this implementation, the network device may transmit information to the tag, and the tag forwards the information to the terminal device.

The network architectures shown in FIG. 1 to FIG. 4A and FIG. 4B are merely examples. There may be fewer or more tags, terminal devices, and network devices. The communication systems described in embodiments of this application are intended to describe the technical solutions in embodiments of this application more clearly, but constitute no limitation on the communication systems to which embodiments of this application are applicable. A person of ordinary skill in the art may learn that, with evolution of the network architectures, the technical solutions provided in embodiments of this application are also applicable to similar technical problems. When the technical solutions in embodiments of this application are applied to another communication system, devices, components, modules, and the like in embodiments may be replaced with corresponding devices, components, and modules in the another communication system. This is not limited. The network device mentioned in embodiments of this application includes an access network device and/or a core network device.

The tag may be referred to as an RFID tag or an electronic tag, or may be referred to as an A-IoT terminal or an A-IoT device, and is generally attached to an object to identify a target object. The tag may receive a radio frequency signal from a reader. With energy obtained from an induced current, the tag may send information stored in a chip in the tag, or the tag may actively send a signal at a specific frequency to the reader. The reader reads the information from the tag. The tag is simple to design, and is designed by integrating application layer signaling and air interface signaling, featuring low power consumption. Tags are classified into three types: an active tag, a passive tag, and a semi-active/semi-passive tag. The active tag is also referred to as an active tag (active tag), the passive tag is also referred to as a passive tag (passive tag), and the semi-active/semi-passive tag is also referred to as a semi-passive tag (semi-passive tag). The active tag/active tag is equipped with a power supply, and uses a communication manner of actively generating a carrier, that is, may actively send a signal to the reader, without a need to obtain, based on a received signal, energy for sending the signal. The passive tag/passive tag is not equipped with a module like a power supply, or a power supply module has a small amount of electricity. In this case, the passive tag may use a backscatter (backscatter)-based communication manner, may obtain energy from an environment, and send a signal by using the energy. The passive tag may operate in a backscatter communication scenario. For example, the passive tag obtains energy by backscattering a signal from the reader, to transmit data. The semi-active/semi-passive tag integrates advantages of the active tag and the passive tag, and may be used as a special marker. Usually, the semiactive/semi-passive tag is in a sleep state, may not operate, and does not send a signal to the outside. The semiactive/semi-passive tag is activated and starts to operate only when entering an activation signal range of a low-frequency activator. The tag in embodiments of this application may be an active tag, a passive tag, a semi-active/semi-passive tag, or the like.

In embodiments of this application, the tag may be used as a terminal device. Correspondingly, the terminal device serving as the tag in this application may be of the following three types: a passive terminal, which has no energy storage, cannot independently generate a signal, and uses backscatter to transmit a signal; a semi-passive terminal, which has energy storage, but cannot independently generate a signal, and uses backscatter to transmit a signal, where energy stored in the semi-passive terminal can be used to amplify a backscattered signal; and an active terminal, which has energy storage, can independently generate a signal, and has an active radio frequency element for transmission.

Both the tag and the reader may be implemented based on infrastructure in a cellular network, or the tag and the reader may be devices in the cellular network. For example, a function of the reader may be implemented by a network device or a terminal device in the cellular network, and a function of the tag may be implemented by a terminal device in the cellular network. For example, the tag may be an A-IoT terminal with extremely low power consumption and extremely low complexity. When the terminal device has the tag function, the terminal device may perform contactless data communication with a network device having the reader function or another terminal device having the reader function.

The terminal device is also referred to as a terminal, a terminal apparatus, user equipment (user equipment, UE), a mobile station, a mobile terminal, or the like. For example, the terminal device may be a mobile phone, a computer, a mobile internet device (mobile internet device, MID), a wearable device, a virtual reality (virtual reality, VR) device, an augmented reality (augmented reality, AR) device, a robotic arm, a camera, a robot, a smart home device (for example, a television, an air conditioner, a floor sweeping robot, a sound box, or a set-top box), a relay (relay), or customer premises equipment (customer premise equipment, CPE).

If the various terminal devices described above are located on a vehicle (for example, placed/mounted in the vehicle), the terminal devices may all be considered as vehicle-mounted terminal devices. The vehicle-mounted terminal device may be a vehicle-mounted module, a vehicle-mounted assembly, a vehicle-mounted component, a vehicle-mounted chip, or an on-board unit that is built in the vehicle as one or more components or units. The vehicle-mounted terminal device may alternatively be an entire vehicle device, a vehicle-mounted module, a vehicle, an on-board unit (on-board unit, OBU), a roadside unit (roadside unit, RSU), an in-vehicle infotainment system (also referred to as an in-vehicle sending unit) (telematics box, T-box), a chip, a system-on-a-chip (system-on-a-chip, SoC), or the like. The chip or the SoC may be mounted in the vehicle, the OBU, the RSU, or the T-box.

In embodiments of this application, an apparatus configured to implement a function of a terminal device may be the terminal device, or may be an apparatus that can support the terminal device in implementing the function, for example, a chip system or a combined device or component that can implement the function of the terminal device. The apparatus may be mounted in the terminal device. A specific technology and a specific device form that are used by the terminal device are not limited in embodiments of this application.

The access network device is also referred to as a radio access network (radio access network, RAN) device. A RAN may be a 3GPP-related cellular system, for example, an LTE system, a new radio (new radio, NR) system, or a future-oriented evolved system (for example, a 6G mobile communication system). Alternatively, the RAN may be an open access network (open RAN, O-RAN or ORAN), a cloud radio access network (cloud radio access network, CRAN), a virtualized radio access network (virtualized RAN, vRAN), or the like. Alternatively, the RAN may be a communication system that integrates two or more of the foregoing systems.

The RAN device may also be referred to as a RAN node, a RAN entity, an access node, or the like. For example, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. Alternatively, the RAN node may be a RAN node in a V2X technology, and may be an RSU, an access node in a Wi-Fi system, or the like. Alternatively, the RAN node may be a module or unit that completes a part of functions of a base station. Alternatively, a plurality of RAN nodes cooperate to assist the terminal device in implementing radio access, and different RAN nodes each implement a part of functions of a base station. For example, the RAN node may be a central unit (central unit, CU), a distributed unit (distributed unit, DU), or a radio unit (radio unit, RU). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU (open DU), a CU control plane (CU-control plane, CU-CP) may also be referred to as an O-CU-CP, a CU user plane (CU-user plane, CU-UP) may also be referred to as an O-CU-UP, and the RU may also be referred to as an O-RU (open RU). For ease of description, the CU, the CU-CP, the CU-UP, the DU, and the RU are used as examples for description in this application. The CU and the DU may be configured based on protocol layer functions of a wireless network that are implemented by the CU and the DU. Protocol layers separately configured for the CU and the DU are not limited in embodiments of this application. Any one of the CU, the DU, and the RU in this application may be implemented by a software module, a hardware module, or a combination of a software module and a hardware module.

In different systems, the RAN node may communicate with different devices. For example, as shown in FIG. 5, in an ORAN system, a RAN node (for example, a CU, a DU, or an RU) may communicate with a RAN intelligent controller (RAN intelligent controller, RIC). The RIC includes a near-real-time RIC (near-real-time RIC, near-RT RIC) and a non-real-time RIC (non-real-time RIC, Non-RT RIC).

The near-real-time RIC is configured to perform model training and inference, for example, configured to: train an artificial intelligence (artificial intelligence, AI) model, and perform inference by using the AI model. The near-real-time RIC may obtain information on a network device side and/or a terminal device side from the RAN node and/or a terminal device. The information may be used as training data or inference data. Optionally, the near-real-time RIC may deliver an inference result to the RAN node and/or the terminal device. Optionally, the inference result may be exchanged between a CU and a DU, and/or between the DU and a RU. For example, the near-real-time RIC delivers the inference result to the DU, and the DU sends the inference result to the RU.

The non-real-time RIC is configured to perform model training and inference, for example, configured to: train an AI model, and perform inference by using the model. The non-real-time RIC may obtain information on a network device side and/or a terminal device side from the RAN node and/or a terminal device. The information may be used as training data or inference data, and an inference result may be delivered to the RAN node and/or the terminal device. Optionally, the inference result may be exchanged between a CU and a DU, and/or between the DU and a RU. For example, the non-real-time RIC delivers the inference result to the DU, and the DU sends the inference result to the RU.

Alternatively, the near-real-time RIC and the non-real-time RIC each may be independently disposed as a network element. Optionally, the near-real-time RIC and the non-real-time RIC may alternatively be used as a part of another device. For example, the near-real-time RIC is disposed in the RAN node (for example, in the CU or the DU), and the non-real-time RIC is disposed in an operation administration and maintenance (operation administration and maintenance, OAM) system, a cloud server, a core network device, or another network device.

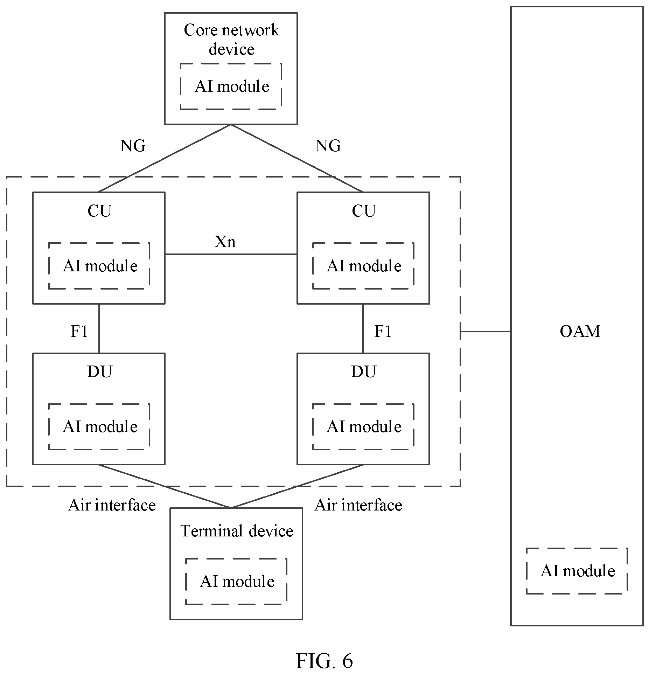

For example, as shown in FIG. 6, in an ORAN system, network elements are connected to each other through an interface (for example, an NG interface, an Xn interface, or an F1 interface) or an air interface. One or more AI modules are disposed in one or more of these network elements, for example, a core network device, a RAN node, a terminal device, or an OAM system (for ease of description, FIG. 6 shows only one AI module). The RAN node may be one RAN node, or may be a plurality of RAN nodes, for example, including a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. Models of the AI modules are configured based on different parameters, and the AI modules may implement different functions. The model of the AI module may be configured based on one or more of the following parameters: a structure parameter (for example, at least one of the following: a quantity of layers of a neural network, a width of the neural network, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI module may have one or more models. One model may obtain one output through inference, and the output includes one or more parameters. Learning processes, training processes, or inference processes of different models may be deployed on different nodes or devices, or may be deployed on a same node or device.

In embodiments of this application, the access network device may have a built-in reader, configured to perform a sending function and a receiving function of a reader. Functions of the reader may be further split. The reader is divided into a receiver (receiver) and an exciter (helper). The receiver is also referred to as a receive end or a receiving unit, and the exciter is also referred to as an excitation end or an excitation unit. The excitation unit is equivalent to a transmitter in the reader, and the receiving unit is equivalent to the receiver in the reader. When the reader is implemented in a split architecture, different entities of the reader may be deployed on different access network devices. For example, the exciter is deployed on a first access network device, and is configured to perform the sending function of the reader; and the receiver is deployed on a second access network device, and is configured to perform the receiving function of the reader. Transmission between the exciter and the reader/the access network device may be performed through an air interface, or may be performed in a wired connection manner.

In embodiments of this application, an apparatus configured to implement a function of an access network device may be the access network device, or may be an apparatus that can support the access network device in implementing the function, for example, a chip system or a combined device or component that can implement the function of the access network device. The apparatus may be mounted in the access network device. A specific technology and a specific device form that are used by the access network device are not limited in embodiments of this application.

The core network device corresponds to different devices in different systems. For example, in a 4G system, the core network device may be a mobility management entity (mobility management entity, MME) and/or a serving gateway (serving gateway, S-GW). In a 5G system, the core network device may be an access and mobility management function (access and mobility management function, AMF), a session management function (session management function, SMF), or a user plane function (user plane function, UPF). In embodiments of this application, the core network device has a function of managing a tag, and the core network device may alternatively be a tag management function (tag management function, TMF) or an enhanced AMF. The enhanced AMF has a tag management function.

In embodiments of this application, an apparatus configured to implement a function of a core network device may be the core network device, or may be an apparatus that can support the core network device in implementing the function, for example, a chip system or a combined device or component that can implement the function of the core network device. The apparatus may be mounted in the core network device. A specific technology and a specific device form that are used by the core network device are not limited in embodiments of this application.

The foregoing briefly describes the communication systems to which embodiments of this application are applicable. The following describes related technical solutions in embodiments of this application.

Tags can be applied to a plurality of industries and fields. As a typical application, logistics management is implemented by inventorying physical tags. Tag inventory requires tags to access a network. After each tag accesses the network randomly, the tag may report its identifier to a reader. In this way, the reader can determine the existence of tags within its coverage area. After accessing the network, the tag may exchange some service information with an access network device (for example, the reader) and/or a core network device. For example, the core network device may forward a message to the tag via the access network device, and the message may include information about an operation that needs to be performed on the tag. Alternatively, the access network device may forward a message from the tag to the core network device, and the access network device may parse or process a message from the core network device or the tag. Common tag services include an inventory operation, a read (Read) operation, a write (Write) operation, a positioning (Positioning) operation, a kill (Kill) operation, a tag information obtaining operation, and the like. The inventory operation is used to obtain identifiers of all tags in a coverage area of the access network device. The read operation may be used to read data from the tag. The write operation may be used to write data into the tag. The positioning operation may be used to obtain position information of the tag. The kill operation is also referred to as an invalidation operation, and may be used to invalidate or kill a tag identifier. The tag information obtaining operation may be used to obtain information about the tag, for example, an identifier of the tag, information stored in the tag, and position information of the tag. The foregoing tag services are merely examples, and a quantity and types of the tag services are not limited in embodiments of this application. For example, the tag services further include an authentication service.

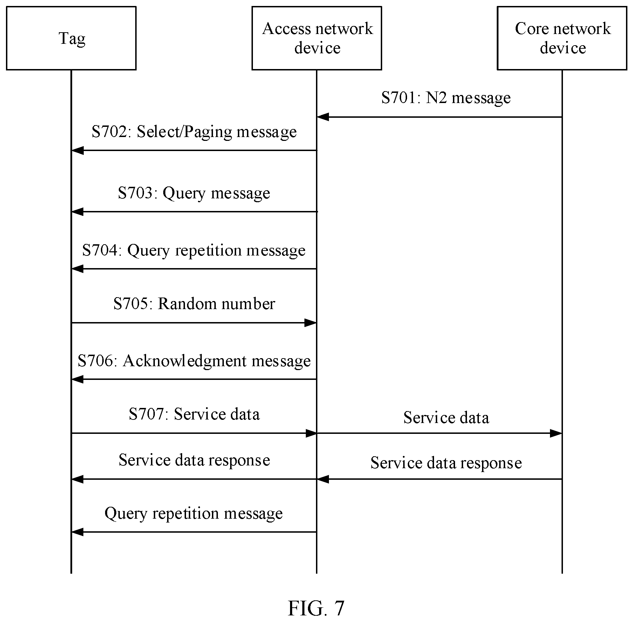

FIG. 7 is a schematic flowchart of performing a service between a tag and a network device according to an embodiment of this application. The network device includes an access network device and a core network device. The access network device has a function of a reader. The procedure includes the following steps.

S701: The core network device sends an N2 message to the access network device.

N2 is a communication interface between the core network device and the access network device. The N2 message may be used to request to perform an operation on one or more tags.

S702: The access network device broadcasts a select (select) message or a paging (paging) message.

The select/paging message includes an identifier range of a tag to be operated. The identifier range of the tag includes an identifier of the tag.

S703: The access network device sends a query (query) message.

The query message may carry a Q value, and the Q value may determine a quantity of random access timeslots. Access collisions between tags can be reduced by setting the Q value. The tag may generate a random number of [0, 2^Q-1] based on the Q value. For example, if Q=4, the tag generates a random number of [0, 15]. The tag records the random number as an initial value of a counter (counter). Each time the tag receives a query repetition message, the counter is decremented by 1. When the counter reaches 0, the tag sends a random number to initiate access.

S704: The access network device sends a query repetition (queryrep) message.

The access network device may send the query repetition message multiple times. For example, the access network device may repeatedly send 2^Q query repetition messages. S704 shows only one query repetition message. A subsequent query repetition message may be sent after S706 or S707.

S705: The tag sends a random number to the access network device.

When determining that an identifier of the tag is within the identifier range indicated by the select message, the tag sends a random number to the access network device after detecting the query message, to respond to the query message.

S706: The access network device sends an acknowledgment message to the tag, where the acknowledgment message includes the random number received from the tag.

The access network device sends the acknowledgment message to the tag. If the random number included in the acknowledgment message is consistent with the random number sent by the tag to the access network device, the tag accesses the access network device.

S707: The tag sends service data to the core network device via the access network device.

After accessing the access network device, the tag may send service data to the core network device via the access network device. For example, the tag sends an electronic product code (electronic product code, EPC) of the tag to the access network device, and the access network device forwards the EPC to the core network device.

After receiving the service data, the core network device may send a service data response to the access network device, and the access network device forwards the service data response to the tag. In FIG. 7, the access network device does not need to parse a message from the core network device and/or a message from the tag, and is only responsible for forwarding the received message. That is, the access network device transparently transmits the service data of the tag to the core network device, and the service data is carried in a non-access stratum (non-access stratum, NAS) message.

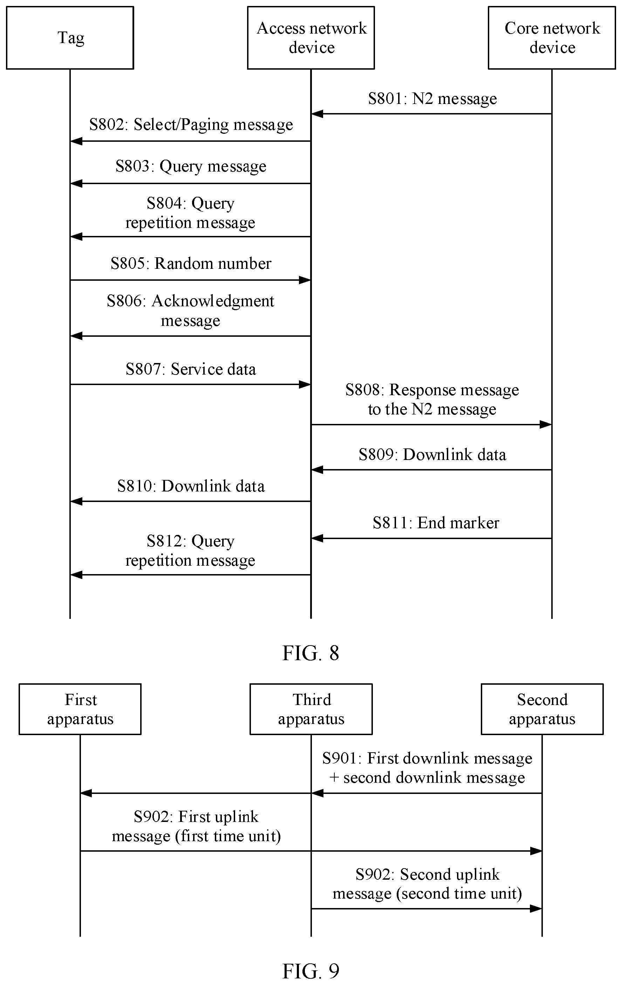

In a possible scenario, the service data of the tag is not carried in a NAS message, but is first sent to the access network device, and then sent by the access network device to the core network device through an N2 interface. In this scenario, a procedure of performing a service between the tag and the core network device is shown in FIG. 8. For repeated content in FIG. 8 and FIG. 7, refer to related content in FIG. 7. Details are not described herein again.

S801: The core network device sends an N2 message to the access network device.

S802: The access network device broadcasts a select (select) message or a paging (paging) message.

S803: The access network device sends a query (query) message.

S804: The access network device sends a query repetition (queryrep) message.

S805: The tag sends a random number to the access network device.

S806: The access network device sends an acknowledgment message to the tag, where the acknowledgment message includes the random number received from the tag.

S807: The tag sends service data to the access network device.

S808: The access network device sends a response message to the N2 message to the core network device.

The response message includes the service data sent by the tag.

S809: The core network device sends downlink data to the access network device.

S810: The access network device sends, to the tag, the downlink data sent by the core network device.

S811: The core network device sends an end marker (end_marker) to the access network device.

When the service is completed, the core network device sends the end_marker to the access network device, and the end_marker carries a temporary identifier of the tag, to indicate the access network device to release the tag and the temporary identifier.

S812: The access network device sends a query repetition message to the tag.

The access network device receives the end_marker, releases the temporary identifier of the tag, and releases the tag. For example, the access network device sends a query message.

In the procedure shown in FIG. 8, each time the access network device inventories a tag, the access network device sends a temporary identifier of the tag to the core network device, to associate the tag with the N2 interface, so that the access network device determines, from the received N2 message, a tag corresponding to the N2 message. The temporary identifier may be a random number sent by the tag.

Currently, sending one query repetition message by the access network device may trigger a plurality of tags to send random numbers, and collisions may occur among the random numbers sent by the plurality of tags. As a result, all of the tags fail to access a network, and consequently, leading to low access efficiency. If the random numbers sent by the plurality of tags do not collide, after identifying the random numbers, the access network device sends an acknowledgment message to only one tag, allowing only one tag to access the network. As a result, other tags all fail to access the network, and consequently, the access efficiency remains low.

In view of this, embodiments of this application provide a communication method, and the method is used to improve access efficiency.

In embodiments of this application, "when", "in case", and "if" all mean that an apparatus performs corresponding processing in an objective case, are not intended to limit time, do not require the apparatus to necessarily perform a determining action during implementation, and do not mean that there is another limitation. Unless otherwise specified, "if" and "in case" are interchangeable, and "when" and "in a case of" are interchangeable. "When" and "if"/"in case" are interchangeable.

In embodiments of this application, the word like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term like "example" or "for example" is intended to present a relative concept in a specific manner.

In this specification, "indicating" may include directly indicating and indirectly indicating. For example, when a piece of indication information is described as indicating information I, it means that the indication information may directly indicate I or indirectly indicate I, but does not mean that the indication information necessarily carries I.

Information indicated by indication information is referred to as to-be-indicated information. In a specific implementation process, there are a plurality of manners of indicating the to-be-indicated information, for example, but not limited to, a manner of directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may be indicated by using an arrangement sequence of a plurality of pieces of information that is pre-agreed up (for example, specified in a protocol), to reduce indication overheads to some extent. In addition, common parts of all pieces of information may be identified and are indicated in a unified manner, to reduce indication overheads caused by separately indicating same information. For example, a person skilled in the art should understand that a precoding matrix includes precoding vectors, and the precoding vectors in the precoding matrix may have a same part in terms of composition or other attributes.

Furthermore, specific indication manners may alternatively be various existing indication manners, for example, but not limited to, the foregoing indication manners and various combinations thereof. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In embodiments of this application, "sending" and "receiving" represent signal transmission directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "outputting" of a chip interface, and the "receiving" may alternatively be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a trace, or an interface.

It may be understood that necessary processing like coding and modulation may be performed on the information between the source end at which the information is sent and the destination end, but the destination end may understand valid information from the source end. Similar descriptions in this application may be understood similarly, and details are not described again.

In embodiments of this application, unless otherwise specified, a quantity of nouns represents "a singular noun or a plural noun", namely, "one or more". "At least one" refers to one or more, and "a plurality of" refers to two or more. "And/Or" describes an association relationship between associated objects, and represents that three relationships may exist. For example, A and/or B may represent the following cases: Only A exists, both A and B exist, and only B exists, where A and B may be singular or plural. A character "/" generally represents an "or" relationship between the associated objects. For example, A/B represents A or B. "At least one of the following items (pieces)" or a similar expression thereof refers to any combination of these items, including a single item (piece) or any combination of a plurality of items (pieces). For example, at least one of a, b, or c represents a, b, c, a and b, a and c, b and c, or a, b, and c, where a, b, and c may be singular or plural.

Ordinal numbers such as "first" and "second" mentioned in embodiments of this application are intended to distinguish between a plurality of objects, but are not intended to limit sizes, content, an order, a timing, priorities, importance degrees, or the like of the plurality of objects. For example, a quantity of first monitoring occasions and a quantity of first subgroups are two different pieces of information, and do not represent that the two pieces of information are different in content, priority, importance degree, or the like. For a type of technical feature, technical features in the type of technical feature are distinguished by using "A", "B", "C", "D", and the like, and there is no sequence or size order among the technical features described by "A", "B", "C", and "D". For example, Case A and Case B in this specification are merely intended to distinguish between different content, and do not limit a sequence or size order between Case A and Case B, and priorities or importance degrees of Case A and Case B.

The following describes in detail, with reference to the accompanying drawings, the solutions provided in embodiments of this application. In the following description, an example in which the communication method provided in embodiments of this application is applied to the communication systems shown in FIG. 1 to FIG. 6 is used. The communication systems and application scenarios described in embodiments of this application are intended to describe the technical solutions in embodiments of this application more clearly, and do not constitute a limitation on the technical solutions provided in embodiments of this application. A person of ordinary skill in the art may learn that, with evolution of the communication systems and emergence of a new application scenario, the technical solutions provided in embodiments of this application are also applicable to similar technical problems.

The following describes the communication method by using an example in which the communication method provided in embodiments of this application is performed by a first apparatus, a second apparatus, and a third apparatus. The first apparatus and the third apparatus may be terminal devices (for example, A-IoT terminals or A-IoT devices) having a tag function, or may be components (for example, modules such as chips, processing units, or processors) of a terminal device having the tag function. For example, the first apparatus and the third apparatus may be the terminal devices having the tag function in FIG. 1 to FIG. 6, or may be chips (systems) in the terminal devices having the tag function in FIG. 1 to FIG. 6. The second apparatus may be a network device or a terminal device having a reader function, or may be a component (for example, a module like a chip, a processing unit, or a processor) of a network device or a terminal device having the reader function. For example, the second apparatus may be the network device or the terminal device having the reader function in FIG. 1 to FIG. 6, or may be a chip (system) in the network device or the terminal device having the tag function in FIG. 1 to FIG. 6.

Embodiment 1: FIG. 9 is a schematic flowchart of a communication method according to an embodiment of this application. In FIG. 9, the method is described from a perspective of interaction between the first apparatus, the second apparatus, and the third apparatus. It should be understood that, in this embodiment of this application, that the method is performed by the first apparatus, the second apparatus, and the third apparatus is merely used as an example, and the method is not limited to being performed by the first apparatus, the second apparatus, and the third apparatus. For example, the method in this embodiment of this application may alternatively be performed by more first apparatuses. When the more first apparatuses are involved, each of the more first apparatuses performs a same procedure. As shown in FIG. 9, a procedure of the communication method includes the following steps.

S901: The second apparatus sends a first downlink message and a second downlink message. Correspondingly, the first apparatus receives the first downlink message and the second downlink message from the second apparatus, and the third apparatus receives the first downlink message and the second downlink message from the second apparatus.

In this embodiment of this application, the first downlink message may be used to confirm successful access of the first apparatus (or referred to as that contention resolution succeeds). For example, the first downlink message is an acknowledgment (ack) message (or referred to as a random access request response (random access request response) message, or referred to as a random access identification response (random access identification response) message).

Alternatively, the first downlink message may be used to trigger an access occasion (or referred to as an access resource, or referred to as an access opportunity, or referred to as an access slot) of the first apparatus. For example, the first downlink message is a select (select) message, a paging (paging or paging-like) message, a query (query) message (or referred to as an access round trigger/indication (access round trigger/indication) message), or a query repetition (queryrep) message (or referred to as an access occasion trigger/indication (access occasion trigger/indication) message).

Alternatively, the first downlink message may be used to trigger the first apparatus to send an uplink message. For example, the first downlink message is a downlink trigger message.

Alternatively, the first downlink message is used to calibrate a time offset (time offset) of the first apparatus or provide a time calibration message for the first apparatus. For example, the first downlink message is a synchronization message.

Alternatively, the first downlink message is used to broadcast information to the first apparatus. For example, the first downlink message is a system message.

Alternatively, the first downlink message may be used to indicate that transmission of the first apparatus is completed (or ends or succeeds), for example, indicate that transmission of uplink data of the first apparatus is completed (or ends or succeeds), or indicate that transmission of downlink data of the first apparatus is completed (or ends or succeeds), or indicate that a service of the first apparatus is completed (or ends or succeeds).

The second downlink message may be used to confirm successful access of the third apparatus (or referred to as that contention resolution succeeds). For example, the second downlink message is an acknowledgment message (or referred to as a random access request response message, or referred to as a random access identification response message).

Alternatively, the second downlink message may be used to trigger an access occasion (or referred to as an access resource, or referred to as an access opportunity, or referred to as an access slot) of the third apparatus. For example, the second downlink message is a select message, a paging message, a query message (or referred to as an access round trigger/indication message), or a query repetition message (or referred to as an access occasion trigger/indication message).

Alternatively, the second downlink message may be used to trigger the third apparatus to send an uplink message. For example, the second downlink message is a downlink trigger message.

Alternatively, the second downlink message is used to calibrate a time offset of the third apparatus or provide a time calibration message for the third apparatus. For example, the second downlink message is a synchronization message.

Alternatively, the second downlink message is used to broadcast information to the third apparatus. For example, the second downlink message is a system message.

Alternatively, the second downlink message may be used to indicate that transmission of the third apparatus is completed (or ends or succeeds), for example, indicate that transmission of uplink data of the third apparatus is completed (or ends or succeeds), or indicate that transmission of downlink data of the third apparatus is completed (or ends or succeeds), or indicate that a service of the third apparatus is completed (or ends or succeeds). This is not limited in embodiments of this application.

The uplink messages sent by the first apparatus and the third apparatus may be data of the first apparatus and the third apparatus, for example, data in a storage area (for example, an EPC, a tag identification (tag identification, tag ID), user data, encrypted data, a key, sensor data, and written data), cached data (for example, medium access control (medium access control, MAC) cached data, radio link control (radio link control, RLC) or radio resource control (radio resource control, RRC) or packet data convergence protocol (packet data convergence protocol, PDCP) cached data, to-be-transmitted uplink data, a feedback (or response) message to downlink data (or downlink signaling, a downlink message, or the like), data stored in a register or memory, and the like), a specific sequence (for example, a positioning sequence or a scrambling sequence), or a request message (for example, an authorization request, a registration request, or an authentication request). Optionally, the uplink message may be encapsulated or carried in an RRC message, a MAC message, a NAS message, an RLC message, an application layer (application layer) message, an A-IoT-NAS message, or the like. The uplink message may be sent to an access network device or an entity that can receive an A-IoT uplink message, for example, a reader entity (reader entity), or may be transparently transmitted by a base station to a core network device or a server. The core network device may be a 5G, 5.5G, or 6G core network device like an AMF, an A-IoT management function (A-IoT management function, A-IoTMF) or a TMF, a UPF, or an application function (application function, AF). The server may be an internet of things server, a factory server, a user server, or the like. Optionally, the uplink message may also be sent to a terminal device, or sent to the terminal device and then forwarded to the access network device.

When the downlink messages received by the first apparatus and the third apparatus are downlink data, the downlink data may be from a network device (an access network device or a core network device), a server, an application layer entity, a relay node, an entity (for example, a reader entity) that can send a downlink message to the A-IoT device, or the like. The downlink data may alternatively be transparently transmitted from the core network device or the server to the terminal device that receives the downlink data via the base station, the terminal device, or the reader entity. The core network device may be a 5G, 5.5G, or 6G core network device like an AMF, an A-IoT management function (A-IoT management function, A-IoTMF) or a TMF, a UPF, or an application function (application function, AF). The server may be an internet of things server, a factory server, a user server, or the like. The downlink data may alternatively be from the terminal device, or forwarded from the network device to a terminal device (a receive end) via the terminal device. Optionally, the downlink data may be cached data of the foregoing entity or device (for example, MAC cached data, RLC or RRC or PDCP cached data, transmitted (or to-be-transmitted) downlink data (for example, a message (or a command) for reading, writing, locking, fire extinguishing, requesting sensing, positioning, or ranging), a feedback (or a response or an acknowledgment (for example, a read success response, a data transmission success response, a service complete response, a registration response, an authorization response, an authentication response, or an access request response)) message to uplink data (or an uplink message), data stored in a register or a memory, or the like), or a specific sequence (for example, a positioning sequence or a scrambling sequence). Optionally, the downlink data may be encapsulated or carried in an RRC message, a MAC message, a NAS message, an RLC message, an application layer message, an A-IoT-NAS message, or the like.

It may be understood that S901 is merely an example in which the second apparatus sends two downlink messages (namely, the first downlink message and the second downlink message). The second apparatus may alternatively send more downlink messages. Correspondingly, the first apparatus may alternatively receive the more downlink messages from the second apparatus, and the third apparatus may alternatively receive the more downlink messages from the second apparatus. This is not limited in embodiments of this application.

In a specific implementation process, that the second apparatus may send the first downlink message and the second downlink message together (or referred to as sending in a cascaded manner) may be understood as that the first downlink message and the second downlink message may be carried in a same message, or may be understood as that a same message includes information or fields of the first downlink message and the second downlink information, that is, the first downlink message and the second downlink message may be a same message. Alternatively, that the second apparatus may send the first downlink message and the second downlink message separately may be understood as that the first downlink message and the second downlink message may be carried in different downlink messages, or may be understood as that different downlink messages respectively include information or fields of the first downlink message and the second downlink information, that is, the first downlink message and the second downlink message may be different downlink messages. This is not limited in embodiments of this application.

The first downlink message may be associated with a first time unit, and the second downlink message may be associated with a second time unit. The first time unit is a time unit in which the first apparatus sends a first uplink message to the second apparatus, and the second time unit is a time unit in which the third apparatus sends a second uplink message to the second apparatus. Optionally, that the first time unit may be different from the second time unit may be understood as that there is no overlapping part between the first time unit and the second time unit. For example, the first time unit is a slot 1, and the second time unit is a slot 2; or the first time unit is a subframe 1 or a frame 1, and the second time unit is a subframe 2 or a frame 2. Optionally, the first time unit and the second time unit may be one time window, or may be a period of time, or may be one moment. This is not limited in embodiments of this application.

The first apparatus may determine, based on one or more of the following, the first time unit associated with the first downlink message, and the third apparatus may determine, based on one or more of the following, the second time unit associated with the second downlink message.

### (1) First time information (or referred to as a time offset).

The first time information may be carried in the first downlink message and the second downlink message, or may be carried in the first downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message. Optionally, the first time information may be configured by a fourth apparatus for the second apparatus, and the fourth apparatus may be a near-real-time RIC and a non-real-time RIC in an ORAN system. For example, after determining the first time information based on historical data, the fourth apparatus sends the first time information to the second apparatus.

The first time information may indicate a first duration, or may indicate an index (index) of a first duration. This is not limited in embodiments of this application. A unit of the first duration may be microsecond (µs), second (s), millisecond (ms), or the like. For example, the first duration is 10 µs. Alternatively, a unit of the first duration may be frame, subframe, superframe, slot, or the like. For example, the first duration is two slots. Alternatively, a unit of the first duration may be a quantity of times of receiving a downlink message similar to a synchronization signal. For example, the first duration is two receptions of a downlink message similar to a synchronization signal. This is not limited in embodiments of this application.

For example, when the first time information indicates the first duration, the first time information may indicate 128 consecutive numbers as a value of the first duration by using seven bits, and the unit of the first duration may be indicated by other bits. For example, 0 indicates microsecond, and 1 indicates millisecond, or the unit may be a default unit in a protocol.

When the first time information indicates the index of the first duration, the first time information may indicate an index of the first duration shown in Table 1, and the first apparatus may determine the first duration based on the index of the first duration shown in Table 1.

**Table 1**

| Index | First duration (µs) |
|---|---|
| 0 | 0 µs |
| 1 | 62.5 µs |
| 2 | 212.5 µs |

For another example, when the first time information indicates the index of the first duration, the first apparatus may determine the first duration based on an index of the first duration and a coverage level of the first apparatus, as shown in Table 2. For example, when the first apparatus is a terminal device having a function of a semi-passive tag, the coverage distance of the first apparatus is less than or equal to 37 meters, and the coverage level of the first apparatus is 0; or when the first apparatus is a terminal device having a function of a passive tag, the coverage distance of the first apparatus is less than or equal to 15 meters, and the coverage level of the first apparatus is 0.

**Table 2**

| Index | Coverage level 0: first duration (µs) | Coverage level 1: first duration (µs) |
|---|---|---|
| 0 | 0 µs | 0 µs |
| 1 | 60 µs | 2,200 µs |
| 2 | 210 µs | 4,600 µs |

The first apparatus may determine the first time unit based on the first duration indicated by the first time information. Specifically, the first apparatus may determine the first time unit based on a third time unit and the first duration indicated by the first time information, where the third time unit is a time unit in which the first apparatus receives the first downlink message from the second apparatus. For example, if the first duration indicated by the first time information is T1, a duration between the third time unit and the first time unit is T1. Optionally, the third time unit may be a time window, a period of time, or a time instant. This is not limited in embodiments of this application. Optionally, when the first downlink message and the second downlink message are sent together, that is, the first downlink message and the second downlink message are carried in a same message, the third time unit may be a time unit in which the first apparatus reads the first downlink message from the same message after receiving the same message, or may be a time at which the first apparatus receives the same message. For example, if the first downlink message in the same message is located after the second downlink message, the first apparatus receives the same message in a slot 1, reads the second downlink message from the same message in a slot 2, and reads the first downlink message from the same message in a slot 3. In this case, the third time unit is the slot 3. Alternatively, if the first downlink message in the same message is located before the second downlink message, the first apparatus receives the same message in the slot 1, reads the first downlink message from the same message in the slot 2, and reads the second downlink message from the same message in the slot 3. In this case, the third time unit is the slot 2. Alternatively, regardless of whether the first downlink message in the same message is located before or after the second downlink message, the first apparatus receives the same message in the slot 1. In this case, the third time unit is the slot 1.

Optionally, the first duration indicated by the first time information may be less than or equal to a processing duration of the first apparatus. The processing duration of the first apparatus may include but is not limited to one or more of the following: a duration for processing a downlink message by the first apparatus, where the duration is related to a length of the downlink message, and is generally several or tens of µs, for example, 15.625 µs; a duration for switching the first apparatus from a reception state to a transmission state, where the duration is generally several or tens of µs; and a duration for the first apparatus to perform an operation (for example, a read operation, a write operation, or a kill operation), where the duration is related to content of the downlink message.

Alternatively, the first duration indicated by the first time information may be greater than a processing duration of the first apparatus. Correspondingly, when determining the first time unit based on the third time unit and the first duration indicated by the first time information, the first apparatus needs to consider the processing duration of the first apparatus. For example, the first duration indicated by the first time information is T1, and the processing duration of the first apparatus is T2. If T2 is greater than T1, the duration between the third time unit and the first time unit is T1+T2 or T2.

### (2) Second time information.

The second time information may be carried in the first downlink message and the second downlink message, or may be carried in the second downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message. Optionally, the second time information may be configured by a fourth apparatus for the second apparatus, and the fourth apparatus may be a near-real-time RIC and a non-real-time RIC in an ORAN system. For example, after determining the second time information based on historical data, the fourth apparatus sends the second time information to the second apparatus.

The second time information may indicate a second duration, or may indicate an index of a second duration. This is not limited in embodiments of this application. A unit of the second duration may be microsecond, second, millisecond, or the like. For example, the second duration is 10 µs. Alternatively, a unit of the second duration may be frame, subframe, superframe, slot, or the like. For example, the second duration is two slots. Alternatively, a unit of the second duration may be a quantity of times of receiving a downlink message similar to a synchronization signal. For example, the second duration is two receptions of a downlink message similar to a synchronization signal. This is not limited in embodiments of this application.

The third apparatus may determine the second time unit based on the second duration indicated by the second time information. Specifically, the third apparatus may determine the second time unit based on a fourth time unit and the second duration indicated by the second time information. For example, if the second duration indicated by the second time information is T3, a duration between the fourth time unit and the second time unit is T3. Optionally, the fourth time unit may be a time window, a period of time, or a time instant. This is not limited in embodiments of this application. Optionally, when the first downlink message and the second downlink message are sent together, that is, the first downlink message and the second downlink message are carried in a same message, the fourth time unit may be a time unit in which the first apparatus reads the second downlink message from the same message after receiving the same message, or may be a time at which the first apparatus receives the same message. For example, if the first downlink message in the same message is located after the second downlink message, the first apparatus receives the same message in a slot 1, reads the second downlink message from the same message in a slot 2, and reads the first downlink message from the same message in a slot 3. In this case, the fourth time unit is the slot 2. Alternatively, if the first downlink message in the same message is located before the second downlink message, the first apparatus receives the same message in the slot 1, reads the first downlink message from the same message in the slot 2, and reads the second downlink message from the same message in the slot 3. In this case, the fourth time unit is the slot 3. Alternatively, regardless of whether the first downlink message in the same message is located before or after the second downlink message, the first apparatus receives the same message in the slot 1. In this case, the fourth time unit is the slot 1. Alternatively, the third apparatus may determine the second time unit based on the first time unit and the second duration indicated by the second time information. For example, if the second duration indicated by the second time information is T3, a duration between the first time unit and the second time unit is T3.

Optionally, the second duration indicated by the second time information may be less than or equal to a processing duration of the third apparatus. The processing duration of the third apparatus may include but is not limited to one or more of the following: a duration for processing a downlink message by the third apparatus, where the duration is related to the length of the downlink message, and is generally several or tens of µs, for example, 15.625 µs; a duration for switching the third apparatus from a reception state to a transmission state, where the duration is generally several or tens of µs; and a duration for the third apparatus to perform an operation (for example, a read operation, a write operation, or a kill operation), where the duration is related to the content of the downlink message.

Alternatively, the second duration indicated by the second time information may be greater than a processing duration of the third apparatus. Correspondingly, when determining the second time unit based on the fourth time unit and the second duration indicated by the second time information, the third apparatus needs to consider the processing duration of the third apparatus. For example, the second duration indicated by the second time information is T3, and the processing duration of the third apparatus is T4. If T4 is greater than T3, the duration between the fourth time unit and the second time unit is T3+T4 or T4.

### (3) Third time information.

The third time information may be (pre)configured, or may be defined in a standard, or may be agreed upon by the first apparatus, the second apparatus, and the third apparatus, or may be calculated according to a calculation formula that is satisfied by the third time information, or may be carried in the first downlink message and the second downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message.

The third time information may indicate a third duration, or may indicate an index of a third duration. This is not limited in embodiments of this application. A unit of the third duration may be microsecond, second, millisecond, or the like. For example, the third duration is 10 µs. Alternatively, a unit of the third duration may be frame, subframe, superframe, slot, or the like. For example, the third duration is two slots. Alternatively, a unit of the third duration may be a quantity of times of receiving a downlink message similar to a synchronization signal. For example, the third duration is two receptions of a downlink message similar to a synchronization signal. This is not limited in embodiments of this application.

The third time information may be related to first configuration information. The first configuration information may be used by the first apparatus to send an uplink message to the second apparatus, and may be used by the third apparatus to send an uplink message to the second apparatus. The first configuration information is related to a coverage level of the first apparatus and/or a coverage level of the third apparatus. For example, when the first apparatus is a terminal device having a function of a semi-passive tag, the coverage distance of the first apparatus is less than or equal to 37 meters, and the coverage level of the first apparatus is 0; or when the first apparatus is a terminal device having a function of a passive tag, the coverage distance of the first apparatus is less than or equal to 15 meters, and the coverage level of the first apparatus is 0. Configuration information corresponding to the coverage level 0 indicates that transmission time per bit is 1.5625 µs, a quantity of preamble (preamble) bits is 8, and a quantity of postamble (postamble) bits is 8. For example, the third duration indicated by the third time information may satisfy the following calculation formula: *x*/*t*₁ + y ∗ *t*₂ + *z*/*t*₃, where *x* is the quantity of preamble bits, *t*₁ is start symbol time of an uplink message, *y* is a bit length of the uplink message, *t*₂ is the transmission time per bit, *z* is the quantity of postamble bits, and *t*₃ is end symbol time of the uplink message. The uplink message may be the uplink message sent by the first apparatus to the second apparatus, or may be the uplink message sent by the third apparatus to the second apparatus.

Specifically, if the first time information is not carried in the first downlink message and the second downlink message, is not carried in the first downlink message, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message, the first apparatus may determine the third time information in the foregoing manner. Further, when an order in which the first apparatus receives the first downlink message and the second downlink message from the second apparatus is determined, the first apparatus may determine the first time unit based on the third time information, the order in which the first apparatus receives the first downlink message and the second downlink message from the second apparatus, and the third time unit. For example, if the third duration indicated by the third time information is T5, and the first apparatus receives the first downlink message and the second downlink message from the second apparatus in the following order: the first downlink message and then the second downlink message, the first apparatus may determine that the duration between the third time unit and the first time unit is 0. It may be understood that the first time information is determined based on the third time information and the order in which the first apparatus receives the first downlink message and the second downlink message from the second apparatus, and the first time unit is determined based on the first time information and the third time unit.

If the second time information is not carried in the first downlink message and the second downlink message, is not carried in the second downlink message, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message, the third apparatus may determine the third time information in the foregoing manner. Further, when an order in which the third apparatus receives the first downlink message and the second downlink message from the second apparatus can be determined, the third apparatus may determine the second time unit based on the third time information, the order in which the third apparatus receives the first downlink message and the second downlink message from the second apparatus, and the fourth time unit. For example, if the third duration indicated by the third time information is T5, and the third apparatus receives the first downlink message and the second downlink message from the second apparatus in the following order: the first downlink message and then the second downlink message, the third apparatus may determine that the duration between the fourth time unit and the second time unit is T5. It may be understood that the second time information is determined based on the third time information and the order in which the third apparatus receives the first downlink message and the second downlink message from the second apparatus, and the second time unit is determined based on the second time information and the fourth time unit.

### (4) First configuration information.

The first configuration information may be (pre)configured, or may be defined in a standard, or may be agreed upon by the first apparatus, the second apparatus, and the third apparatus, or may be carried in the first downlink message and the second downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message.

Specifically, if the first time information is not carried in the first downlink message and the second downlink message, is not carried in the first downlink message, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message, the first apparatus may determine the first configuration information in the foregoing manner. When the order in which the first apparatus receives the first downlink message and the second downlink message from the second apparatus is determined, the first apparatus may determine the third time information based on the first configuration information, and determine the first time unit based on the third time information, the order in which the first apparatus receives the first downlink message and the second downlink message from the second apparatus, and the third time unit. For example, if the third duration indicated by the third time information is T5, and the first apparatus receives the first downlink message and the second downlink message from the second apparatus in the following order: the first downlink message and then the second downlink message, the first apparatus may determine that the duration between the third time unit and the first time unit is 0. It may be understood that the third time information is determined based on the first configuration information, the first time information is determined based on the third time information and the order in which the first apparatus receives the first downlink message and the second downlink message from the second apparatus, and the first time unit is determined based on the first time information and the third time unit.

If the second time information is not carried in the first downlink message and the second downlink message, is not carried in the second downlink message, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message, the third apparatus may determine the first configuration information in the foregoing manner. Further, when an order in which the third apparatus receives the first downlink message and the second downlink message from the second apparatus can be determined, the third apparatus may determine the third time information based on the first configuration information, and determine the second time unit based on the third time information, the order in which the third apparatus receives the first downlink message and the second downlink message from the second apparatus, and the fourth time unit. For example, if the third duration indicated by the third time information is T5, and the third apparatus receives the first downlink message and the second downlink message from the second apparatus in the following order: the first downlink message and then the second downlink message, the third apparatus may determine that the duration between the fourth time unit and the second time unit is T5. It may be understood that the third time information is determined based on the first configuration information, the second time information is determined based on the third time information and the order in which the third apparatus receives the first downlink message and the second downlink message from the second apparatus, and the second time unit is determined based on the second time information and the fourth time unit.

### (5) First value.

The first value may be (pre)configured, or may be defined in a standard, or may be agreed upon by the first apparatus, the second apparatus, and the third apparatus, or may be carried in the first downlink message and the second downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message.

The first value may be a maximum value of the first duration (or referred to as the duration between the third time unit and the first time unit) indicated by the first time information, or may be a maximum value of the second duration (or referred to as the duration between the third time unit and the first time unit) indicated by the second time information. Optionally, the first value may be related to the first time information, the second time information, or the third time information. For example, the first value is less than or equal to K times of the third duration indicated by the third time information, where K is a positive integer.

Specifically, if the first time information is not carried in the first downlink message and the second downlink message, is not carried in the first downlink message, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message, the first apparatus may determine the third time information and the first value in the foregoing manner. Further, when an order in which the first apparatus receives the first downlink message and the second downlink message from the second apparatus is not determined, the first apparatus may determine the first time unit based on the third time information, a second value (for example, randomly generated by the first apparatus), and the third time unit, where the second value is less than or equal to the first value. For example, if the first value is 4, the third duration indicated by the third time information is T5, and the second value randomly generated by the first apparatus is 1, the first apparatus may determine that the duration between the third time unit and the first time unit is T5. It may be understood that the first time information is determined based on the third time information and the second value, and the first time unit is determined based on the first time information and the third time unit. Alternatively, the first apparatus may determine the first time unit based on a second value (for example, randomly generated by the first apparatus) and the third time unit, where the second value is less than or equal to the first value. For example, if the first value is 100 µs, and the second value randomly generated by the first apparatus is 50 µs, the first apparatus may determine that the duration between the third time unit and the first time unit is 50 µs. It may be understood that the first time information is determined based on the second value, and the first time unit is determined based on the first time information and the third time unit.

If the second time information is not carried in the first downlink message and the second downlink message, is not carried in the second downlink message, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message, the third apparatus may determine the third time information and the first value in the foregoing manner. Further, when an order in which the third apparatus receives the first downlink message and the second downlink message from the second apparatus, the third apparatus may determine the second time unit based on the third time information, a third value (for example, randomly generated by the third apparatus), and the fourth time unit, where the third value is less than or equal to the first value. For example, if the first value is 4, the third duration indicated by the third time information is T5, and the second value randomly generated by the third apparatus is 2, the third apparatus may determine that the duration between the fourth time unit and the second time unit is 2*T5. It may be understood that the second time information is determined based on the third time information and the third value, and the second time unit is determined based on the second time information and the fourth time unit. Alternatively, the third apparatus may determine the first time unit based on a third value (for example, randomly generated by the third apparatus) and the third time unit, where the third value is less than or equal to the first value. For example, if the first value is 100 µs, and the third value randomly generated by the third apparatus is 50 µs, the third apparatus may determine that the duration between the fourth time unit and the second time unit is 50 µs. It may be understood that the second time information is determined based on the third value, and the second time unit is determined based on the second time information and the fourth time unit.

In a possible implementation, the first downlink message and the second downlink message may include one or more of the following: the first time information, the second time information, the third time information, the first configuration information, and the first value. In this case, the first apparatus may determine, based on one or more of the information included in the first downlink message and the second downlink message, the first time unit associated with the first downlink message, and the third apparatus may determine, based on one or more of the information included in the first downlink message and the second downlink message, the second time unit associated with the second downlink message.

In another possible implementation, the first downlink message and the second downlink message may alternatively not include any one of the following information: the first time information, the second time information, the third time information, the first configuration information, and the first value. In this case, the third time information may be (pre)configured, or may be defined in a standard, or may be agreed upon by the first apparatus, the second apparatus, and the third apparatus, or may be calculated according to a calculation formula that is satisfied by the third time information, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message. The first value may be (pre)configured, or may be defined in a standard, or may be agreed upon by the first apparatus, the second apparatus, and the third apparatus, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message. Therefore, the first apparatus may determine, based on the third time information and the order in which the third apparatus receives the first downlink message and the second downlink message from the second apparatus or the second value, the first duration indicated by the first time information, and determine the first time unit based on the third time unit and the first duration indicated by the first time information. The third apparatus may determine, based on the third time information and the order in which the third apparatus receives the first downlink message and the second downlink message from the second apparatus or the third value, the second duration indicated by the second time information, and determine the second time unit based on the fourth time unit and the second duration indicated by the second time information.

In a possible implementation, the first downlink message and the second downlink message may include one or more of the following: first identification information and second identification information. The first identification information may include one or more of a number of a first process associated with the first apparatus, frequency information identification associated with the first apparatus, a transmission configuration identifier associated with the first apparatus, a group identifier associated with the first apparatus, or a temporary identifier associated with the first apparatus. The first identification information may include one or more of a number of a second process associated with the third apparatus, frequency information identification associated with the third apparatus, a transmission configuration identifier associated with the third apparatus, a group identifier associated with the third apparatus, or a temporary identifier associated with the third apparatus.

Specifically, the first apparatus may respond only to the first downlink message that is from the second apparatus and that carries identification information associated with the first apparatus, and the third apparatus may respond only to the second downlink message that is from the second apparatus and that carries identification information associated with the third apparatus. For example, the second apparatus sends a downlink message 1 that carries a number of a process 1 associated with the first apparatus and a downlink message 2 that carries a number of a process 2 associated with the third apparatus. In response to the downlink message 1, the first apparatus sends an uplink message 1 to the second apparatus in a time unit 1 associated with the downlink message 1. In response to the downlink message 2, the third apparatus sends an uplink message 2 to the second apparatus in a time unit 2 associated with the downlink message 1. The second apparatus may send, within a processing duration for processing the uplink message 1, a downlink message 3 that carries a number of a process 3. After the first apparatus and the third apparatus receive the downlink message 3, because the downlink message 3 does not carry the number of the process 1 and the number of the process 2, the first apparatus and the third apparatus do not respond to the downlink message 3, and an A-IoT device associated with the process 3 responds to the downlink message 3. In this way, the second apparatus can implement multi-process processing, thereby reducing impact of the processing duration for processing the uplink message by the second apparatus, and improving an access rate.

After the first apparatus and the third apparatus receive, from the second apparatus, the first downlink message and the second downlink message that carry the identification information associated with the first apparatus and the identification information associated with the third apparatus, if the identification information associated with the first apparatus is the frequency information identifier associated with the first apparatus, and the identification information associated with the third apparatus is the frequency information identifier associated with the third apparatus, the first apparatus and the second apparatus may separately send the first uplink message and the second uplink message to the second apparatus in a same time unit at frequencies respectively associated with the first apparatus and the second apparatus. Because the frequency at which the first apparatus sends the first uplink message to the second apparatus is staggered from the frequency at which the third apparatus sends the second uplink message to the second apparatus, frequency division multiplexing is implemented, and a collision between the first apparatus and the third apparatus is reduced.

In a possible implementation, the second apparatus may separately send the first downlink message and the second downlink message. The first downlink message may be used to trigger an access occasion (or referred to as an access resource, or referred to as an access opportunity, or referred to as an access slot) of the first apparatus and indicate that transmission of the first apparatus is completed (or ends or succeeds), and the second downlink message may be used to trigger an access occasion (or referred to as an access resource, or referred to as an access opportunity, or referred to as an access slot) of the third apparatus and indicate that transmission of the third apparatus is completed (or ends or succeeds). For example, the first downlink message and the second downlink message may be a select message, a paging message, a query message (or referred to as an access round trigger/indication message), or a query repetition message (or referred to as an access occasion trigger/indication message). The first downlink message may be associated with at least one first time subunit, and each first time subunit may be triggered by a first downlink sub-message. It may be understood that the first time unit associated with the first downlink message is determined from the at least one first time subunit.

Optionally, the first downlink message may trigger a 1^{st} first time subunit in the at least one first time subunit.

Optionally, the first downlink message may be associated with the at least one first time subunit, and each first time subunit in the at least one first time subunit may be a time window, a period of time, or a time instant. This is not limited in embodiments of this application. After receiving the first downlink message, the A-IoT device (for example, the first apparatus) may randomly select one of the first time subunits to respond to the first downlink message. It may be understood that one of the first time subunits is randomly selected as the first time unit associated with the first downlink message.

Optionally, before selecting one first time subunit, the A-IoT device (for example, the first apparatus) may first select a first time subunit set. It may be understood that the first downlink message is associated with one first time subunit set, and the first time subunit set may include at least one first time subunit.

Optionally, the A-IoT device (for example, the first apparatus) may receive the first downlink sub-message multiple times, and determine whether a first time subunit triggered by a first downlink sub-message received each time is the first time unit.

Specifically, the first time subunit set associated with the first downlink message may be a quantity of times of receiving the first downlink message. For example, the first apparatus selects a first time subunit set triggered by the first downlink message received for the fourth time, where the first time subunit set includes at least one first time subunit; or the first downlink message sent by the second apparatus may include a number associated with the A-IoT device (for example, the first apparatus). For example, a 1^{st} first downlink message sent by the second apparatus includes a number 1, a 2^{nd} first downlink message includes a number 2, and a 3^{rd} first downlink message includes a number 3. If the number associated with the first apparatus is the number 2, the first apparatus selects a first time subunit set triggered by the 2^{nd} first downlink message, where the first time subunit set includes at least one first time subunit. For another example, the first apparatus may determine, based on a time unit in which the first downlink message is received for a Q1^{th} time, that a Q1^{th}, (Q1-1)^{th}, or (Q1+1)^{th} first time subunit set is the first time unit set selected by the first apparatus, where Q1 is a positive integer less than or equal to P (or P-1, or 2^P-1, or the like), Q1 may be randomly generated by the first apparatus, and P may be (pre)configured, or may be defined in a standard, or may be agreed upon by the first apparatus, the second apparatus, and the third apparatus, or may be carried in the first downlink message.

The quantity of times of receiving the first downlink message, or the number associated with the A-IoT device (for example, the first apparatus) included in the first downlink message sent by the second apparatus may be randomly selected by the first apparatus, or may be determined by the first apparatus based on identification information, or may be determined by the first apparatus based on mask information, or may be determined by the first apparatus based on indication information of the second apparatus. For example, one first time subunit set is selected, and after the second apparatus indicates that access fails or transmission of the uplink data fails, the first apparatus attempts to perform access again in another subsequent first time subunit set, so as to avoid, as much as possible, a collision in sending uplink messages caused by a plurality of apparatuses selecting a same first time subunit.

The first time unit associated with the first downlink message may alternatively be a quantity of times of receiving the first downlink sub-message. Alternatively, a first downlink sub-message sent by the second apparatus may further include the number associated with the A-IoT device (for example, the first apparatus). For example, a 1^{st} first downlink sub-message sent by the second apparatus includes a number 1, a 2^{nd} first downlink sub-message includes a number 2, and a 3^{rd} first downlink sub-message includes a number 3. If the number associated with the first apparatus is the number 3, the first apparatus selects a first time subunit triggered by the 3^{rd} first downlink sub-message as the first time unit to respond to the first downlink message.

The quantity of times of receiving the first downlink sub-message, or the number associated with the A-IoT device (for example, the first apparatus) included in the first downlink sub-message sent by the second apparatus may be randomly selected by the first apparatus, or may be determined by the first apparatus based on the identification information, or may be determined by the first apparatus based on the mask information, or may be determined by the first apparatus based on the indication information of the second apparatus. For example, one first time subunit is selected, and after the second apparatus indicates that access fails or transmission of the uplink data fails, the first apparatus attempts to perform access again in another subsequent first time subunit, so as to avoid, as much as possible, a collision in sending uplink messages caused by a plurality of apparatuses selecting a same first time subunit.

It may be understood that the first downlink sub-message may be used to trigger the access occasion of the A-IoT device (for example, the first apparatus), and the first downlink sub-message may be further used by the A-IoT device (for example, the first apparatus) to determine a time unit for sending an uplink message (for example, the first time unit for sending the first uplink message). When receiving the second downlink message, the first apparatus determines that transmission is completed (or ends or succeeds). Optionally, when receiving the first downlink sub-message, the first apparatus determines that transmission is completed (or ends, or succeeds).

Specifically, after the first apparatus and the third apparatus receive the first downlink message from the second apparatus, the first apparatus may determine a quantity of first time subunits based on the quantity of times of receiving the first downlink message or the first downlink sub-message, or the number carried in the first downlink message, or the number carried in the first downlink sub-message. For example, the first apparatus may determine, based on a time unit in which the first downlink message or the first downlink sub-message is received for an N1^{th} time, that an N1^{th}, (N1-1)^{th}, or (N1+1)^{th} first time subunit is the first time unit, where N1 is a positive integer less than or equal to M (or M-1, or 2^M-1, or the like), N1 may be randomly generated by the first apparatus, and M may be (pre)configured, or may be defined in a standard, or may be agreed upon by the first apparatus, the second apparatus, and the third apparatus, or may be carried in the first downlink message.

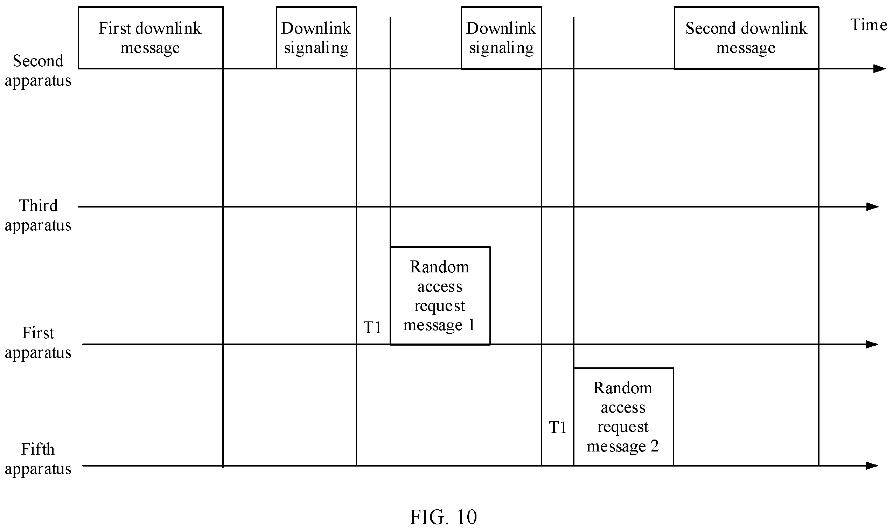

For example, FIG. 10 is a timing diagram of a first apparatus, a second apparatus, a third apparatus, and a fifth apparatus according to an embodiment of this application. A horizontal axis coordinate in FIG. 10 represents time. The fifth apparatus is an A-IoT device, or may be a component (for example, a module like a chip, a processing unit, or a processor) of an A-IoT device. T1 is a processing duration for processing a downlink message (for example, the first downlink message; the downlink signaling; or the second downlink message) by the first apparatus, the third apparatus, and the fifth apparatus. (It may be understood that, if impact of the processing duration is not considered, T1 may be 0; and if impact of the processing duration is considered, T1 may be greater than 0.) When the first downlink message triggers both the access occasion of the first apparatus and an access occasion of the fifth apparatus, after receiving the downlink signaling for the first time, the first apparatus may send a random access request message 1 to the second apparatus after the processing duration T1 for processing the downlink message (for example, the first downlink sub-message), and after receiving the first downlink sub-message for the second time, the fifth apparatus may send a random access request message 2 to the second apparatus after the processing duration T1 for processing the downlink message (for example, the first downlink sub-message). That is, time at which the first apparatus sends the random access request message 1 to the second apparatus is staggered from time at which the fifth apparatus sends the random access request message 2 to the second apparatus, thereby reducing a collision between the first apparatus and the fifth apparatus. The random access request message 1 and the random access request message 2 are used to request to access a network (which may be understood as accessing an access device, or accessing a network, or accessing a core network device, or accessing a terminal device (in a relay scenario)). Optionally, the random access request message 1 and the random access request message 2 may be further associated with the terminal devices or some received indication, identification, or resource information, to be used for contention resolution. For example, the random access request message 1 and the random access request message 2 may be random numbers or random access identifiers, may be preamble sequences, may be code division sequences, may be identification information pre-stored in devices, or may be identification information allocated by a network.

S902: The first apparatus sends the first uplink message to the second apparatus in the first time unit, and the third apparatus sends the second uplink message to the second apparatus in the second time unit. Correspondingly, the second apparatus receives the first uplink message from the first apparatus in the first time unit, and receives the second uplink message from the third apparatus in the second time unit.

In this embodiment of this application, after receiving the first downlink message and the second downlink message from the second apparatus, the first apparatus may send the first uplink message to the second apparatus in the first time unit associated with the first downlink message.

The first uplink message is in response to the first downlink message (that is, the first uplink message is related to the first downlink message). For example, when the first downlink message is an acknowledgment message used to confirm successful access of the first apparatus, the first uplink message is an uplink data message used to the transmit uplink data of the first apparatus, and the uplink data message may include an EPC of the first apparatus; or when the first downlink message is a query message or a query repetition message used to trigger the access occasion of the first apparatus, the first uplink message is a random access request message used to request access (or referred to as contention resolution) of the first apparatus, and the random access request message may include a first identifier of the first apparatus (for example, a first random number (random number, RN) randomly generated by the first apparatus, or a first random access identification (random access identification, random access identification ID) corresponding to the first apparatus).

After receiving the first downlink message and the second downlink message from the second apparatus, the third apparatus may send the second uplink message to the second apparatus in the second time unit associated with the second downlink message.

The second uplink message is in response to the second downlink message (that is, the second uplink message is related to the second downlink message). For example, when the second downlink message is an acknowledgment message used to confirm successful access of the third apparatus, the second uplink message is an uplink data message used to transmit the uplink data of the third apparatus, and the uplink data message may include an EPC of the third apparatus; or when the second downlink message is a query message or a query repetition message used to trigger the access occasion of the third apparatus, the second uplink message is a random access request message used to request access (or referred to as contention resolution) of the third apparatus, and the random access request message may include a second identifier of the third apparatus (for example, a second random number randomly generated by the third apparatus, or a second random access identification corresponding to the third apparatus).

In a possible implementation, because clock offsets (for example, sampling clock frequency offsets (sampling clock frequency offsets, SFOs)) of the first apparatus and the third apparatus may be large, for example, an offset of 1 ms per 10 ms, the first apparatus cannot accurately send the first uplink message in the first time unit, and the third apparatus cannot accurately send the second uplink message in the second time unit. Therefore, the first apparatus, the second apparatus, and the third apparatus may resolve the problem in the following manners.

Manner 1: The second apparatus may reserve time for receiving the first uplink message from the first apparatus in the first time unit, and the time may include the first time unit. For example, the first time unit corresponds to a case in which the first apparatus sends the first uplink message 100 µs after the reception of the first downlink message, and the second apparatus reserves a time resource of 90 µs to 110 µs (a time redundancy of 10% before and after, where a specific redundancy amount may be related to the clock offset of the first apparatus; for example, if SFO=10^5, a clock of the first apparatus has an offset of 1 ms per 10 ms) for receiving the first uplink message from the first apparatus. The second apparatus may reserve time for receiving the second uplink message from the third apparatus in the second time unit, and the time may include the second time unit. For example, the second time unit corresponds to a case in which the third apparatus sends the second uplink message 200 µs after the reception of the second downlink message, and the second apparatus reserves a time resource of 190 µs to 210 µs (a time redundancy of 10% before and after, where a specific redundancy amount may be related to the clock offset of the third apparatus; for example, if SFO=10^5, a clock of the third apparatus has an offset of 1 ms per 10 ms) for receiving the second uplink message from the third apparatus.

Manner 2: The first time unit corresponds to a time window, and a length of the time window may be related to the clock offset of the first apparatus. The second time unit corresponds to a time window, and a length of the time window may be related to the clock offset of the third apparatus.

Manner 3: The first apparatus may send the first uplink message to the second apparatus before the first time unit, and the third apparatus may send the second uplink message to the second apparatus before the second time unit (or between the first time unit and the second time unit). For example, the first time unit is 100 µs after the reception of the first downlink message, and the second time unit is 200 µs after the reception of the second downlink message. The first apparatus may send the first uplink message to the second apparatus 1 µs to 100 µs after the reception of the first downlink message, and the second apparatus may send the second uplink message to the second apparatus 100 µs to 200 µs after the reception of the second downlink message.

Manner 4: The first time unit and the second time unit are a same time unit, the time unit corresponds to a time window, and both the first apparatus and the third apparatus performs sending in the time unit, where specific sending time depends on the first apparatus or the third apparatus.

The following describes specific content of the first downlink message, the second downlink message, the first uplink message, and the second uplink message in different cases based on whether the first downlink message and the second downlink message are carried in a same message and specific functions of the first downlink message and the second downlink message.

Case A: The first downlink message and the second downlink message are carried in a same message. The first downlink message is an acknowledgment message 1 used to confirm successful access of the first apparatus and/or trigger the first apparatus to send uplink data, and the second downlink message is an acknowledgment message 2 used to confirm successful access of the third apparatus and/or trigger the third apparatus to send uplink data.

Correspondingly, the first uplink message is an uplink data message 1 used to transmit the uplink data of the first apparatus, and the second uplink message is an uplink data message 2 used to transmit the uplink data of the third apparatus.

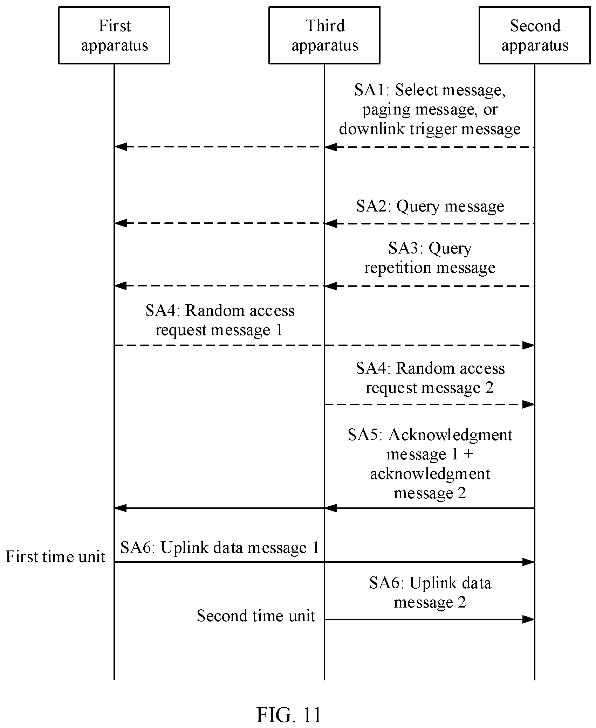

For example, FIG. 11 is a schematic flowchart of another communication method according to an embodiment of this application. SA1 to SA4 are optional steps.

SA1: The second apparatus sends a select message, a paging message, or a downlink trigger message. Correspondingly, the first apparatus receives the select message, the paging message, or the downlink trigger message from the second apparatus, and the third apparatus receives the select message, the paging message, or the downlink trigger message from the second apparatus.

The select message may be used to select the first apparatus and the third apparatus to perform an operation, the paging message may be used to page the first apparatus and the third apparatus to perform an operation, and the downlink trigger message may be used to trigger the first apparatus and the third apparatus to perform an operation. The select message or the paging message may include information indicating the first apparatus and the third apparatus that need to perform an operation. For example, the select message or the paging message may include identification information of the first apparatus (for example, a group identifier of a subgroup in which the first apparatus is located, a class identifier of a category to which the first apparatus belongs, a mask corresponding to the first apparatus, or a device identifier of the first apparatus) to indicate that the first apparatus needs to perform the operation.

Optionally, the select message or the paging message may further include information indicating an operation that needs to be performed by the first apparatus and the third apparatus. For example, information about a read operation may include one or more of the following: a location or a type (for example, a user-defined storage area or an EPC area) of a storage area of data that needs to be read, a length of the data that needs to be read, a start byte of the data that needs to be read, or the like. For another example, information about a write operation may include one or more of the following: a location or a type (for example, a user-defined storage area or an EPC area) of a storage area of data that needs to be written, a length of the data that needs to be written, a start byte of the data that needs to be written, or the like.

SA2: The second apparatus sends a query message. Correspondingly, the first apparatus receives the query message from the second apparatus, and the third apparatus receives the query message from the second apparatus.

The query message may be used to trigger an access occasion of the first apparatus and an access occasion of the third apparatus. The query message may include a Q value, and the Q value may determine a quantity of access occasions of the first apparatus and a quantity of access occasions of the third apparatus. Setting the Q value can reduce an access collision between the first apparatus and the third apparatus.

In a specific implementation process, the first apparatus and the third apparatus may generate a random number of [0, 2^Q-1] based on the Q value. For example, if Q=4, the first apparatus and the third apparatus generate a random number of [0, 15]. The first apparatus and the third apparatus record the random number as an initial value of a counter. Each time the first apparatus and the third apparatus receive a query repetition message, the counter is decremented by 1. When the counter reaches 0, the first apparatus and the third apparatus may send a random access request message to the second apparatus, to initiate access. For example, if the initial value of the counter is 3, the first apparatus and the third apparatus may send the random access request message to the second apparatus when receiving a 3^{rd} query repetition message, to initiate access. It may be understood that the first apparatus and the third apparatus select an access occasion of the first apparatus and the third apparatus that is triggered by the 3^{rd} query repetition message to perform access. For another example, if the initial value of the counter is 0, the first apparatus and the third apparatus may directly send the random access request message to the second apparatus, to initiate access. It may be understood that the first apparatus and the third apparatus select an access occasion of the first apparatus and the third apparatus that is triggered by the query message to perform access.

Optionally, the query message and the foregoing select message, paging message, or downlink trigger message may be carried in a same message, that is, the query message and the foregoing select message, paging message, or downlink trigger message may be a same message. For example, a downlink message 1 includes the information indicating the first apparatus and the third apparatus that need to perform an operation and the Q value. Alternatively, the query message and the foregoing select message, paging message, or downlink trigger message may be carried in different downlink messages, that is, the query message and the foregoing select message, paging message, or downlink trigger message may be different downlink messages. For example, a downlink message 1 includes the information indicating the first apparatus and the third apparatus that need to perform an operation, and a downlink message 2 includes the Q value. This is not limited in embodiments of this application.

SA3: The second apparatus sends a query repetition message. Correspondingly, the first apparatus receives the query repetition message from the second apparatus, and the third apparatus receives the query repetition message from the second apparatus.

The query repetition message may be used to trigger the access occasion of the first apparatus and the access occasion of the third apparatus. The second apparatus may send the query repetition message multiple times. For example, the second apparatus may repeatedly send 2^Q query repetition messages. SA3 shows only one query repetition message. A subsequent query repetition message may be sent after SA5 or SA6.

SA4: The first apparatus sends a random access request message 1 to the second apparatus, and the third apparatus sends a random access request message 2 to the second apparatus. Correspondingly, the second apparatus receives the random access request message 1 from the first apparatus, and receives the random access request message 2 from the third apparatus.

The random access request message 1 is used to request access of the first apparatus, and the random access request message 1 may include the first identifier of the first apparatus. The random access request message 2 is used to request access of the third apparatus, and the random access request message 2 may include the second identifier of the third apparatus.

In a specific implementation process, the second apparatus may receive one or more random access request messages on an access occasion, and the second apparatus may identify a plurality of random access request messages, or may identify only one random access request message.

For example, the second apparatus receives the random access request message 1 from the first apparatus on an access occasion, and the second apparatus successfully identifies the random access request message 1. In this case, the second apparatus returns the acknowledgment message 1, where the acknowledgment message 1 indicates successful access of the first apparatus. For another example, the second apparatus receives the random access request message 1 from the first apparatus and the random access request message 2 from the third apparatus on an access occasion, and the second apparatus fails to identify the random access request message 1 and the random access request message 2. For another example, the second apparatus receives the random access request message 1 from the first apparatus and the random access request message 2 from the third apparatus on an access occasion, and the second apparatus successfully identifies only the random access request message 1. In this case, the second apparatus returns the acknowledgment message 1, where the acknowledgment message 1 indicates successful access of the first apparatus. For another example, the second apparatus receives the random access request message 1 from the first apparatus and the random access request message 2 from the third apparatus on an access occasion, and the second apparatus successfully identifies the random access request message 1 and the random access request message 2. In this case, the second apparatus returns the acknowledgment message 1 and the acknowledgment message 2, where the acknowledgment message 1 indicates successful access of the first apparatus, and the acknowledgment message 2 indicates successful access of the third apparatus.

In SA4, an example in which the second apparatus receives a plurality of random access request messages on an access occasion, and the second apparatus can identify the plurality of random access request messages is used.

SA5: The second apparatus sends the acknowledgment message 1 and the acknowledgment message 2 together. Correspondingly, the first apparatus receives the acknowledgment message 1 and the acknowledgment message 2 from the second apparatus, and the third apparatus receives the acknowledgment message 1 and the acknowledgment message 2 from the second apparatus.

The acknowledgment message 1 is used to confirm successful access of the first apparatus and/or trigger the first apparatus to send the uplink data, and the acknowledgment message 2 is used to confirm successful access of the third apparatus and/or trigger the third apparatus to send the uplink data.

The acknowledgment message 1 and the acknowledgment message 2 may include the first identifier of the first apparatus and the second identifier of the third apparatus. The acknowledgment message 1 and the acknowledgment message 2 may further include but are not limited to one or more of the following: the first time information and the second time information; the third time information; the first configuration information; and the first value. Optionally, the acknowledgment message 1 and the acknowledgment message 2 may further include information indicating a quantity of identifiers. For example, before the first identifier of the first apparatus and the second identifier of the third apparatus, it is indicated that the acknowledgment message 1 and the acknowledgment message 2 include two identifiers. Optionally, the acknowledgment message 1 and the acknowledgment message 2 may be in a format of a MAC protocol data unit (protocol data unit, PDU), that is, the acknowledgment message 1 and the acknowledgment message 2 may be in a same MAC PDU. Optionally, the MAC PDU includes a character string arranged by bytes (8 bits), and the character string may be read in a left-to-right and top-to-bottom order.

For example, the acknowledgment message 1 and the acknowledgment message 2 may be in a format of a MAC PDU shown in Table 3, the first time information is located after the first identifier, and the second time information is located after the second identifier. Therefore, after receiving the acknowledgment message 1 and the acknowledgment message 2, the first apparatus may determine the first time unit based on the third time unit (namely, a time unit in which the first apparatus receives the acknowledgment message 1 and the acknowledgment message 2) and the first duration indicated by the first time information located after the first identifier; and after receiving the acknowledgment message 1 and the acknowledgment message 2, the third apparatus may determine the second time unit based on the fourth time unit (namely, a time unit in which the third apparatus receives the acknowledgment message 1 and the acknowledgment message 2) and the second duration indicated by the second time information located after the second identifier.

**Table 3**

| | |
|---|---|
| First identifier | First time information |
| Second identifier | Second time information |

For another example, the acknowledgment message 1 and the acknowledgment message 2 may be in a format of a MAC PDU shown in Table 4, the third time information is located before the first identifier, and the first identifier is located before the second identifier. Therefore, after receiving the acknowledgment message 1 and the acknowledgment message 2, the first apparatus and the third apparatus may determine, based on an order of the first identifier and the second identifier, that an order in which the first apparatus receives the acknowledgment message 1 and the acknowledgment message 2 is: the acknowledgment message 1 and the acknowledgment message 2. In this way, the first apparatus may determine, based on the third duration indicated by the third time information and the order in which the first apparatus receives the acknowledgment message 1 and the acknowledgment message 2, the first duration indicated by the first time information, and determine the first time unit based on the third time unit (namely, the time unit in which the first apparatus receives the acknowledgment message 1 and the acknowledgment message 2) and the first duration indicated by the first time information. The third apparatus may determine, based on the third duration indicated by the third time information and the order in which the third apparatus receives the acknowledgment message 1 and the acknowledgment message 2, the second duration indicated by the second time information, and determine the second time unit based on the fourth time unit (namely, the time unit in which the third apparatus receives the acknowledgment message 1 and the acknowledgment message 2) and the second duration indicated by the second time information.

**Table 4**

| | | |
|---|---|---|
| Third time information | First identifier | Second identifier |

SA6: The first apparatus sends the uplink data message 1 to the second apparatus in the first time unit, and the third apparatus sends the uplink data message 2 to the second apparatus in the second time unit. Correspondingly, the second apparatus receives the uplink data message 1 from the first apparatus in the first time unit, and receives the uplink data message 2 from the third apparatus in the second time unit.

The uplink data message 1 is used to transmit the uplink data of the first apparatus, and the uplink data message 1 may include the EPC of the first apparatus. The uplink data message 2 is used to transmit the uplink data of the third apparatus, and the uplink data message 2 may include the EPC of the third apparatus.

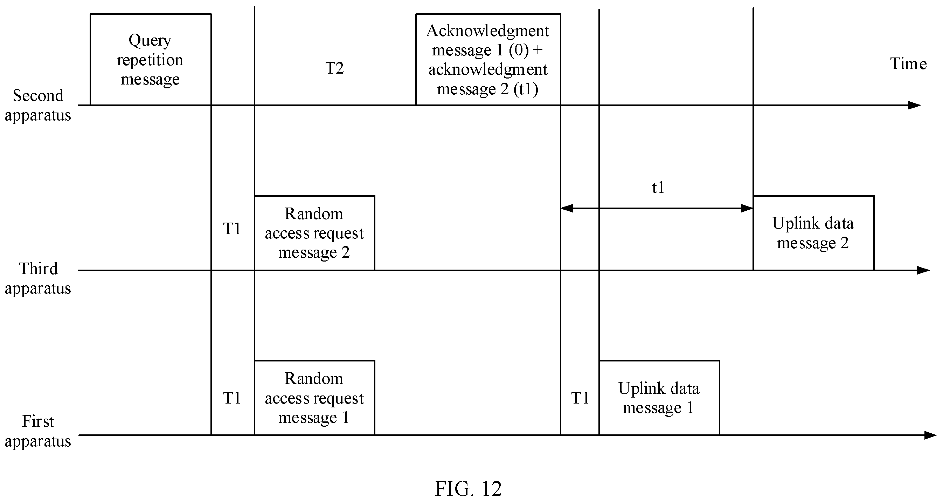

For example, FIG. 12 is a timing diagram of a first apparatus, a second apparatus, and a third apparatus according to an embodiment of this application. A horizontal axis coordinate in FIG. 12 represents time. T1 is a processing duration for processing a downlink message (for example, the query repetition message; or the acknowledgment message 1 and the acknowledgment message 2) by the first apparatus and the third apparatus, and T2 is a processing duration for processing uplink messages (for example, the random access request message 1 and the random access request message 2) by the second apparatus. The first duration indicated by the first time information included in the acknowledgment message 1 is 0, and the second duration indicated by the second time information included in the acknowledgment message 2 is t1. t1 is greater than T1. After receiving the acknowledgment message 1 and the acknowledgment message 2, the first apparatus sends the uplink data message 1 to the second apparatus after the processing duration T1 for processing the downlink message (for example, the acknowledgment message 1 and the acknowledgment message 2). After receiving the acknowledgment message 1 and the acknowledgment message 2, the third apparatus sends the uplink data message 2 to the second apparatus after t1 (t1 includes the processing duration T1 for processing the downlink message (for example, the acknowledgment message 1 and the acknowledgment message 2)). That is, time at which the first apparatus sends the uplink data message 1 to the second apparatus is staggered from time at which the third apparatus sends the uplink data message 2 to the second apparatus, thereby reducing a collision between the first apparatus and the third apparatus.

Case B: The first downlink message and the second downlink message are carried in different downlink messages. The first downlink message is an acknowledgment message 1 used to confirm successful access of the first apparatus, and the second downlink message is an acknowledgment message 2 used to confirm successful access of the third apparatus.

Correspondingly, the first uplink message is an uplink data message 1 used to transmit uplink data of the first apparatus, and the second uplink message is an uplink data message 2 used to transmit uplink data of the third apparatus.

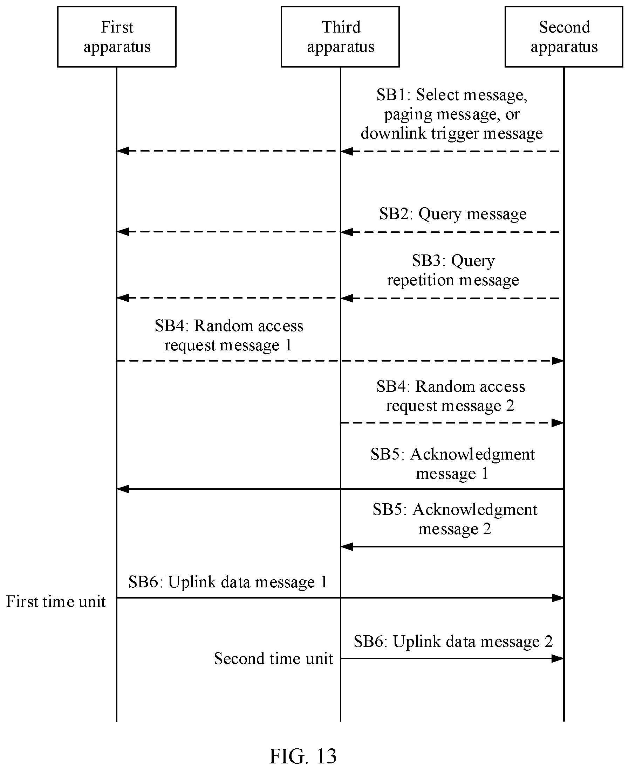

For example, FIG. 13 is a schematic flowchart of still another communication method according to an embodiment of this application. SB1 to SB4 are optional steps.

SB1: The second apparatus sends a select message, a paging message, or a downlink trigger message. Correspondingly, the first apparatus receives the select message or the paging message from the second apparatus, and the third apparatus receives the select message, the paging message, or the downlink trigger message from the second apparatus.

For SB1, refer to SA1. Details are not described herein again.

SB2: The second apparatus sends a query message. Correspondingly, the first apparatus receives the query message from the second apparatus, and the third apparatus receives the query message from the second apparatus.

For SB2, refer to SA2. Details are not described herein again.

SB3: The second apparatus sends a query repetition message. Correspondingly, the first apparatus receives the query repetition message from the second apparatus, and the third apparatus receives the query repetition message from the second apparatus.

For SB3, refer to SA3. Details are not described herein again.

SB4: The first apparatus sends a random access request message 1 to the second apparatus, and the third apparatus sends a random access request message 2 to the second apparatus. Correspondingly, the second apparatus receives the random access request message 1 from the first apparatus, and receives the random access request message 2 from the third apparatus.

For SB4, refer to SA4. Details are not described herein again.

SB5: The second apparatus sends the acknowledgment message 1 and the acknowledgment message 2 separately. Correspondingly, the first apparatus receives the acknowledgment message 1 and the acknowledgment message 2 from the second apparatus, and the third apparatus receives the acknowledgment message 1 and the acknowledgment message 2 from the second apparatus.

The acknowledgment message 1 is used to confirm successful access of the first apparatus and/or trigger the first apparatus to send the uplink data, and the acknowledgment message 2 is used to confirm successful access of the third apparatus and/or trigger the third apparatus to send the uplink data.

The acknowledgment message 1 may include the first identifier of the first apparatus. The acknowledgment message 1 may further include but is not limited to one or more of the following: the first time information, the third time information, the first configuration information, and the first value. The acknowledgment message 2 may include the second identifier of the third apparatus, and the acknowledgment message 2 may further include but is not limited to one or more of the following: the first time information, the third time information, the first configuration information, and the first value. Optionally, the acknowledgment message 1 and the acknowledgment message 2 may be in a format of a MAC PDU, that is, the acknowledgment message 1 and the acknowledgment message 2 may be in different MAC PDUs. Optionally, the MAC PDU includes a character string arranged by bytes (8 bits), and the character string may be read in a left-to-right and top-to-bottom order.

For example, the acknowledgment message 1 may be in a format of a MAC PDU shown in Table 5, and the first time information is located after the first identifier. Therefore, after receiving the acknowledgment message 2, the first apparatus may determine the first time unit based on the third time unit (namely, a time unit in which the first apparatus receives the acknowledgment message 1) and the first duration indicated by the first time information located after the first identifier.

**Table 5**

| | |
|---|---|
| First identifier | First time information |

The acknowledgment message 2 may be in a format of a MAC PDU shown in Table 6, and the second time information is located after the second identifier. Therefore, after receiving the acknowledgment message 2, the third apparatus may determine the second time unit based on the fourth time unit (namely, a time unit in which the third apparatus receives the acknowledgment message 2) and the second duration indicated by the second time information located after the second identifier.

**Table 6**

| | |
|---|---|
| Second identifier | Second time information |

For another example, the acknowledgment message 1 may be in a format of a MAC PDU shown in Table 7, and the third time information is located before the first identifier. Because the acknowledgment message 1 and the acknowledgment message 2 are sent separately, the first apparatus may determine that an order of receiving the acknowledgment message 1 and the acknowledgment message 2 is: the acknowledgment message 1, and the acknowledgment message 2. Therefore, after the first apparatus receives the acknowledgment message 1, the first apparatus may determine, based on the third duration indicated by the third time information and the order in which the first apparatus receives the acknowledgment message 1 and the acknowledgment message 2, the first duration indicated by the first time information, and determine the first time unit based on the third time unit (namely, a time unit in which the first apparatus receives the acknowledgment message 1) and the first duration indicated by the first time information.

**Table 7**

| | |
|---|---|
| Third time information | First identifier |

The acknowledgment message 2 may be in a format of a MAC PDU shown in Table 8, and the third time information is located before the second identifier. Because the acknowledgment message 1 and the acknowledgment message 2 are sent separately, the third apparatus may determine an order of receiving the acknowledgment message 1 and the acknowledgment message 2 is: the acknowledgment message 1 and the acknowledgment message 2. Therefore, after the third apparatus receives the acknowledgment message 2, the third apparatus may determine, based on the third duration indicated by the third time information and the order in which the third apparatus receives the acknowledgment message 1 and the acknowledgment message 2, the second duration indicated by the second time information, and determine the second time unit based on the fourth time unit (namely, a time unit in which the third apparatus receives the acknowledgment message 2) and the second duration indicated by the second time information.

**Table 8**

| | |
|---|---|
| Third time information | Second identifier |

It may be understood that, in this case, the first apparatus and the third apparatus do not determine, based on whether received acknowledgment messages correspond to the first apparatus and the third apparatus, whether access fails, but determine, based on whether the corresponding acknowledgment message is received within a preset duration, whether access fails. For example, the first apparatus and the third apparatus first receive the acknowledgment message 1 and then receive the acknowledgment message 2. After receiving the acknowledgment message 1, the third apparatus does not determine, based on that the acknowledgment message 1 is not an acknowledgment message corresponding to the third apparatus, that access fails, but continues to wait for a period of time. If the third apparatus fails to receive the acknowledgment message 2 within the preset duration, the third apparatus determines that access fails.

SB6: The first apparatus sends the uplink data message 1 to the second apparatus in the first time unit, and the third apparatus sends the uplink data message 2 to the second apparatus in the second time unit. Correspondingly, the second apparatus receives the uplink data message 1 from the first apparatus in the first time unit, and receives the uplink data message 2 from the third apparatus in the second time unit.

The uplink data message 1 is used to transmit the uplink data of the first apparatus, and the uplink data message 1 may include the EPC of the first apparatus. The uplink data message 2 is used to transmit the uplink data of the third apparatus, and the uplink data message 2 may include the EPC of the third apparatus.

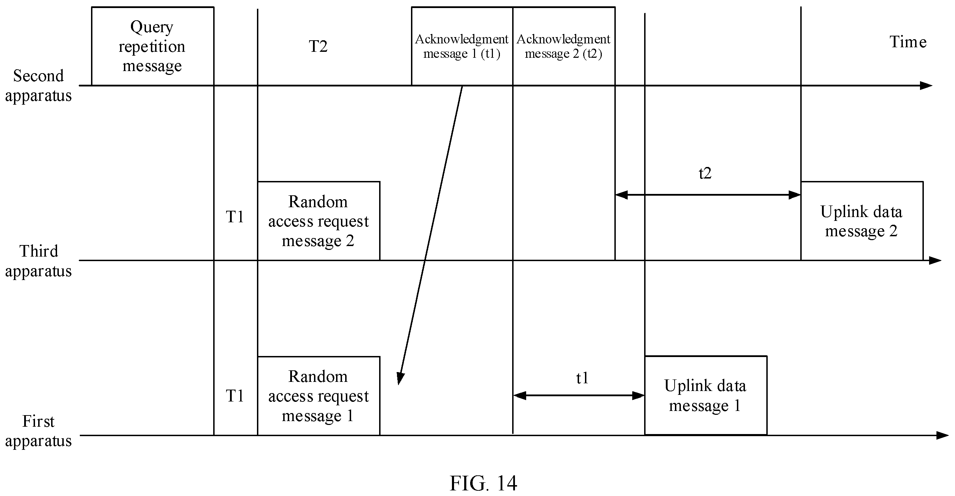

For example, FIG. 14 is another timing diagram of a first apparatus, a second apparatus, and a third apparatus according to an embodiment of this application. A horizontal axis coordinate in FIG. 14 represents time. T1 is a processing duration for processing a downlink message (for example, the query repetition message; the acknowledgment message 1; or the acknowledgment message 2) by the first apparatus and the third apparatus, and T2 is a processing duration for processing uplink messages (for example, the random access request message 1 and the random access request message 2) by the second apparatus. The first duration indicated by the first time information included in the acknowledgment message 1 is t1, and the second duration indicated by the second time information included in the acknowledgment message 2 is t2. t1 is greater than T1. t2 is greater than T1. After receiving the acknowledgment message 1, the first apparatus sends the uplink data message 1 to the second apparatus after t1 (t1 includes the processing duration T1 for processing the downlink message (for example, the acknowledgment message 1)). After receiving the acknowledgment message 2, the third apparatus sends the uplink data message 2 to the second apparatus after t2 (t2 includes the processing duration T1 for processing the downlink message (for example, the acknowledgment message 1)). That is, time at which the first apparatus sends the uplink data message 1 to the second apparatus is staggered from time at which the third apparatus sends the uplink data message 2 to the second apparatus, and time at which the first apparatus sends the uplink data message 1 to the second apparatus is staggered from time at which the second apparatus sends the acknowledgment message 2, thereby reducing a collision between the first apparatus and the third apparatus and a collision between the first apparatus and the second apparatus.

Case C: The first downlink message and the second downlink message are carried in a same message. The first downlink message is a query repetition message 1 used to trigger the access occasion of the first apparatus, and the second downlink message is a query repetition message 2 used to trigger the access occasion of the third apparatus.

Correspondingly, the first uplink message is a random access request message 1 used to request access of the first apparatus, and the second uplink message is a random access request message 2 used to request access of the third apparatus.

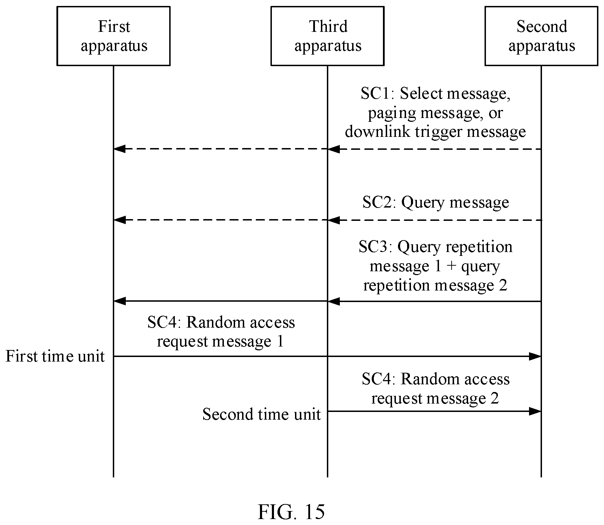

For example, FIG. 15 is a schematic flowchart of still another communication method according to an embodiment of this application. SC1 and SC2 are optional steps.

SC1: The second apparatus sends a select message, a paging message, or a downlink trigger message. Correspondingly, the first apparatus receives the select message, the paging message, or the downlink trigger message from the second apparatus, and the third apparatus receives the select message, the paging message, or the downlink trigger message from the second apparatus.

For SC1, refer to SA1. Details are not described herein again.

SC2: The second apparatus sends a query message. Correspondingly, the first apparatus receives the query message from the second apparatus, and the third apparatus receives the query message from the second apparatus.

For SC2, refer to SA2. Details are not described herein again. In SC2, an example in which neither an initial value of a counter of the first apparatus nor an initial value of a counter of the third apparatus is 0 is used.

SC3: The second apparatus sends the query repetition message 1 and the query repetition message 2 together. Correspondingly, the first apparatus receives the query repetition message 1 and the query repetition message 2 from the second apparatus, and the third apparatus receives the query repetition message 1 and the query repetition message 2 from the second apparatus.

The query repetition message 1 is used to trigger the access occasion of the first apparatus, and the query repetition message 2 is used to trigger the access occasion of the third apparatus.

The query repetition message 1 and the query repetition message 2 may include one or more of the following: the first time information, the second time information, the third time information, the first configuration information, and the first value.

For example, the query repetition message 1 and the query repetition message 2 include the first value. After receiving the query repetition message 1 and the query repetition message 2, the first apparatus may determine, based on the third time information and the second value, the first duration indicated by the first time information, and determine the first time unit based on the third time unit (namely, a time unit in which the first apparatus receives the query repetition message 1 and the query repetition message 2) and the first duration indicated by the first time information. After receiving the query repetition message 1 and the query repetition message 2, the third apparatus may determine, based on the third time information and the third value, the second duration indicated by the second time information, and determine the second time unit based on the fourth time unit (namely, a time unit in which the third apparatus receives the query repetition message 1 and the query repetition message 2) and the second duration indicated by the second time information. The third time information may be (pre)configured, or may be defined in a standard, or may be agreed upon by the first apparatus, the second apparatus, and the third apparatus, or may be calculated according to a calculation formula that is satisfied by the third time information, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first downlink message and the second downlink message. The second value may be randomly generated by the first apparatus, and the second value is less than or equal to the first value. The third value may be randomly generated by the third apparatus, and the third value is less than or equal to the first value.

The query repetition message 1 and the query repetition message 2 may further include one or more of the following: the first identification information and the second identification information. The first identification information may include one or more of a number of a first process associated with the first apparatus, frequency information identification associated with the first apparatus, a transmission configuration identifier associated with the first apparatus, a group identifier associated with the first apparatus, or a temporary identifier associated with the first apparatus. The first identification information may include one or more of a number of a second process associated with the third apparatus, frequency information identification associated with the third apparatus, a transmission configuration identifier associated with the third apparatus, a group identifier associated with the third apparatus, or a temporary identifier associated with the third apparatus.

Optionally, if the first apparatus has responded to a query repetition message 3 and a query repetition message 4, when determining that the first identification information is the identification information associated with the first apparatus, the first apparatus may not respond to the query repetition message 1 and the query repetition message 2. If the third apparatus has responded to a query repetition message 3 and a query repetition message 4, when determining that the second identification information is the identification information associated with the third apparatus, the third apparatus may not respond to the query repetition message 1 and the query repetition message 2. The query repetition message 3 and the query repetition message 4 correspond to an event 1, and the query repetition message 3 and the query repetition message 4 correspond to the event 1, to prevent repeated response to a same event.

Correspondingly, a sixth apparatus is an A-IoT device, or may be a component (for example, a module like a chip, a processing unit, or a processor) of an A-IoT device. A number of a process associated with the sixth apparatus, or an associated frequency information identification, or an associated transmission configuration identifier, or an associated group identifier, or an associated temporary identifier is the same as the number of the process associated with the first apparatus or the third apparatus, or the associated frequency information identification, or the associated transmission configuration identifier, or the associated group identifier, or the associated temporary identifier. After receiving the query repetition message 1 and the query repetition message 2, the sixth apparatus may perform an operation the same as that performed by the first apparatus or the third apparatus.

SC4: The first apparatus sends the random access request message 1 to the second apparatus in the first time unit, and the third apparatus sends the random access request message 2 to the second apparatus in the second time unit. Correspondingly, the second apparatus receives the random access request message 1 from the first apparatus in the first time unit, and receives the random access request message 2 from the third apparatus in the second time unit.

The random access request message 1 is used to request access of the first apparatus, and the random access request message 1 may include the first identifier of the first apparatus. The random access request message 2 is used to request access of the third apparatus, and the random access request message 2 may include the second identifier of the third apparatus.

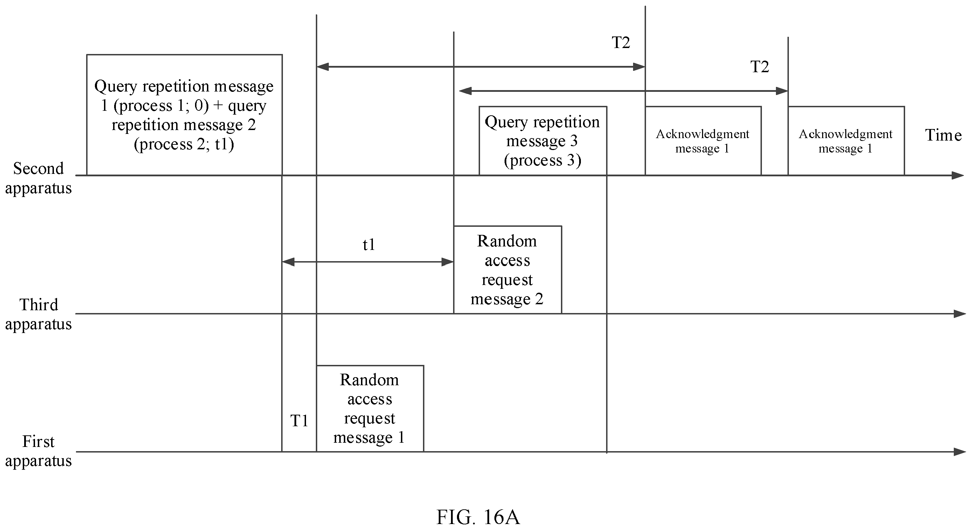

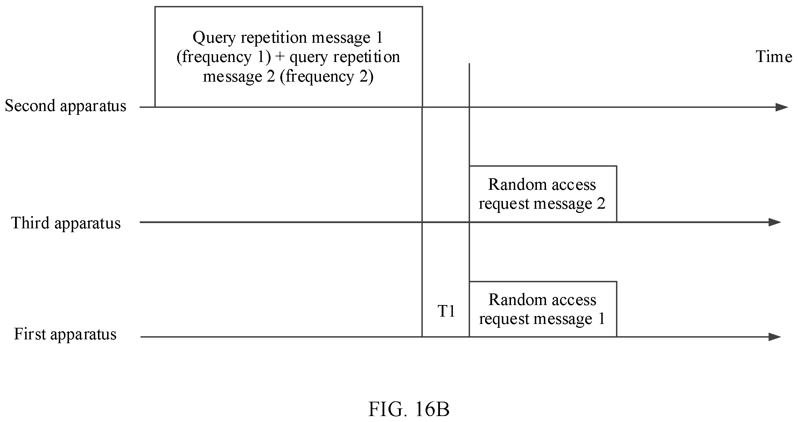

For example, FIG. 16A and FIG. 16B are still another timing diagram of a first apparatus, a second apparatus, and a third apparatus according to an embodiment of this application. A horizontal axis coordinate in FIG. 16A and FIG. 16B represents time. As shown in FIG. 16A, T1 is a processing duration for processing a downlink message (for example, a random access request 1) by the first apparatus and the third apparatus. T2 is a processing duration for processing an uplink message (for example, a random access request 1; or a random access request 1) by the second apparatus. It is determined by the first apparatus based on the query repetition message 1 that the first duration indicated by the first time information is 0, and the process associated with the first apparatus is the process 1. It is determined by the third apparatus based on the query repetition message 2 that the second duration indicated by the second time information is t1, and the process associated with the third apparatus is the process 2. t1 is greater than T1. After receiving the query repetition message 1 and the query repetition message 2, the first apparatus sends the random access request message 1 to the second apparatus after the processing duration T1 for processing the downlink message (for example, the query repetition message 1 and the query repetition message 2). After receiving the query repetition message 1 and the query repetition message 2, the third apparatus sends the random access request message 2 to the second apparatus after t1 (t1 includes the processing duration T1 for processing the downlink message (for example, the query repetition message 1 and the query repetition message 2)). That is, time at which the first apparatus sends the random access request message 1 to the second apparatus is staggered from time at which the third apparatus sends the random access request message 2 to the second apparatus, thereby reducing a collision between the first apparatus and the third apparatus.

In addition, after receiving the random access request message 1, the second apparatus sends the query repetition message 3 within a processing duration T2 for processing the downlink message (for example, the random access request message 1). After receiving the query repetition message 3, the first apparatus and the third apparatus determine that the query repetition message 3 does not carry the number of the process 1 associated with the first apparatus and the number of the process 2 associated with the third apparatus. Therefore, the first apparatus and the third apparatus do not respond to the query repetition message 3. That is, the first apparatus and the third apparatus respond only to a downlink message carrying the number of the process associated with the first apparatus and the third apparatus, so that the second apparatus can implement multi-process processing, thereby reducing impact of T2 and improving an access rate.

As shown in FIG. 16B, T1 is a processing duration for processing a downlink message (for example, a random access request 1) by the first apparatus and the third apparatus. The first apparatus determines, based on the query repetition message 1, that a frequency associated with the first apparatus is a frequency 1, and the third apparatus determines, based on the query repetition message 2, that the frequency associated with the first apparatus is the frequency 1. After receiving the query repetition message 1 and the query repetition message 2, the first apparatus may send the random access request message 1 to the second apparatus at the frequency 1 after the processing duration T1 for processing the downlink message (for example, the query repetition message 1 and the query repetition message 2). After receiving the query repetition message 1 and the query repetition message 2, the third apparatus may send the random access request message 2 to the second apparatus at the frequency 2 after the processing duration T1 for processing the downlink message (for example, the query repetition message 1 and the query repetition message 2). That is, time at which the first apparatus sends the random access request message 1 to the second apparatus is not staggered from time at which the third apparatus sends the random access request message 2 to the second apparatus, and the frequency at which the first apparatus sends the random access request message 1 to the second apparatus is staggered from the frequency at which the third apparatus sends the random access request message 2 to the second apparatus, thereby reducing a collision between the first apparatus and the third apparatus.

Case D: The first downlink message and the second downlink message are a same message. The first downlink message is an acknowledgment message 1 used to confirm successful access of the first apparatus, and the second downlink message is a query repetition message 2 used to trigger the access occasion of the third apparatus.

Correspondingly, the first uplink message is an uplink data message 1 used to transmit uplink data of the first apparatus, and the second uplink message is a random access request message 2 used to request access of the third apparatus.

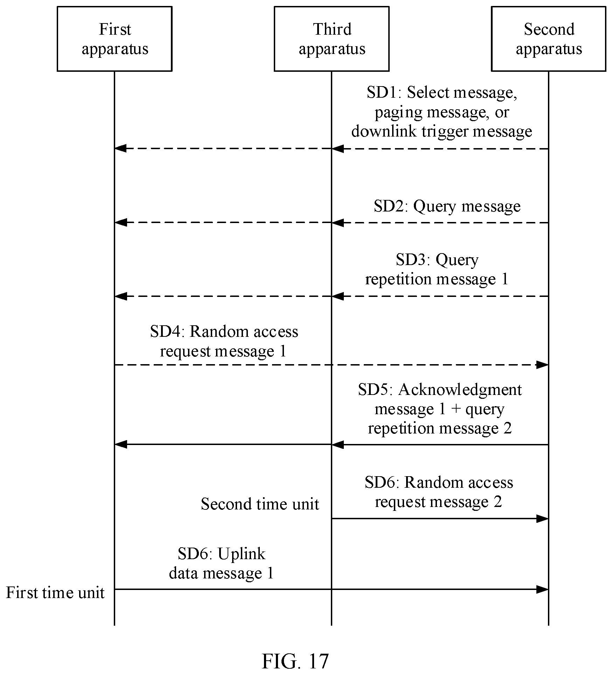

For example, FIG. 17 is a schematic flowchart of still another communication method according to an embodiment of this application. SD1 to SD4 are optional steps.

SD1: The second apparatus sends a select message, a paging message, or a downlink trigger message. Correspondingly, the first apparatus receives the select message, the paging message, or the downlink trigger message from the second apparatus, and the third apparatus receives the select message, the paging message, or the downlink trigger message from the second apparatus.

For SD1, refer to SA1. Details are not described herein again.

SD2: The second apparatus sends a query message. Correspondingly, the first apparatus receives the query message from the second apparatus, and the third apparatus receives the query message from the second apparatus.

For SD2, refer to SA2. Details are not described herein again. In SD2, an example in which neither an initial value of a counter of the first apparatus nor an initial value of a counter of the third apparatus is 0 is used.

SD3: The second apparatus sends a query repetition message 1. Correspondingly, the first apparatus receives the query repetition message 1 from the second apparatus, and the third apparatus receives the query repetition message 1 from the second apparatus.

The query repetition message 1 is used to trigger the access occasion of the first apparatus.

SD4: The first apparatus sends a random access request message 1 to the second apparatus. Correspondingly, the second apparatus receives the random access request message 1 from the first apparatus.

The random access request message 1 is used to request access of the first apparatus. The random access request message 1 may include the first identifier of the first apparatus.

SD5: The second apparatus sends the acknowledgment message 1 and the query repetition message 2 together. Correspondingly, the first apparatus receives the acknowledgment message 1 and the query repetition message 2 from the second apparatus, and the third apparatus receives the acknowledgment message 1 and the query repetition message 2 from the second apparatus.

The acknowledgment message 1 is used to confirm successful access of the first apparatus, and the query repetition message 2 is used to trigger the access occasion of the third apparatus.

The acknowledgment message 1 may include the first identifier of the first apparatus. The acknowledgment message 1 may further include but is not limited to one or more of the following: the first time information, the third time information, the first configuration information, and the first value. Optionally, the acknowledgment message 1 may be in a format of a MAC PDU. Optionally, the MAC PDU includes a character string arranged by bytes (8 bits), and the character string may be read in a left-to-right and top-to-bottom order.

For example, the acknowledgment message 1 may be in the format of the MAC PDU shown in Table 5, and the first time information is located after the first identifier. Therefore, after receiving the acknowledgment message 1 and the query repetition message 2, the first apparatus may determine the first time unit based on the third time unit (namely, a time unit in which the first apparatus receives the acknowledgment message 1 and the query repetition message 2) and the first duration indicated by the first time information located after the first identifier. After the third apparatus receives the acknowledgment message 1 and the query repetition message 2, because the query repetition message 2 does not include any information, the third apparatus may determine that the second duration indicated by the second time information is 0, and further determine the second time unit based on the fourth time unit (namely, a time unit in which the third apparatus receives the acknowledgment message 1 and the query repetition message 2) and the second duration indicated by the second time information.

For another example, the acknowledgment message 1 may be in the format of the MAC PDU shown in Table 7, and the third time information is located before the first identifier. Because the acknowledgment message 1 and the query repetition message 2 are sent together, the first apparatus and the third apparatus may determine that an order of receiving the acknowledgment message 1 and the query repetition message 2 is: the query repetition message 2 and the acknowledgment message 1. Therefore, after the first apparatus and the third apparatus receive the acknowledgment message 1 and the query repetition message 2, the first apparatus may determine, based on the third duration indicated by the third time information and the order in which the first apparatus receives the acknowledgment message 1 and the query repetition message 2, the first duration indicated by the first time information, and determine the first time unit based on the third time unit (namely, a time unit in which the first apparatus receives the acknowledgment message 1 and the query repetition message 2) and the first duration indicated by the first time information. The third apparatus may determine, based on the third duration indicated by the third time information and the order in which the third apparatus receives the acknowledgment message 1 and the query repetition message 2, the second duration indicated by the second time information, and determine the second time unit based on the fourth time unit (namely, a time unit in which the third apparatus receives the acknowledgment message 1 and the query repetition message 2) and the second duration indicated by the second time information.

It may be understood that, in this case, the first apparatus and the third apparatus do not determine, based on whether received acknowledgment messages correspond to the first apparatus and the third apparatus, whether access fails, but determine, based on whether the corresponding acknowledgment message is received within a preset duration, whether access fails. For example, the third apparatus first receives the acknowledgment message 1 corresponding to the first apparatus. After receiving the acknowledgment message 1, the third apparatus does not determine, based on that the acknowledgment message 1 is not an acknowledgment message corresponding to the third apparatus, that access fails, but continues to wait for a period of time. If the third apparatus fails to receive the acknowledgment message 2 corresponding to the third apparatus within the preset duration, the third apparatus determines that access fails.

SD6: The first apparatus sends the uplink data message 1 to the second apparatus in the first time unit, and the third apparatus sends the random access request message 2 to the second apparatus in the second time unit. Correspondingly, the second apparatus receives the uplink data message 1 from the first apparatus in the first time unit, and receives the random access request message 2 from the third apparatus in the second time unit.

The uplink data message 1 is used to transmit the uplink data of the first apparatus, and the uplink data message 1 includes the EPC of the first apparatus. The random access request message 2 is used to request access of the third apparatus, and the random access request message 2 includes the second identifier of the third apparatus.

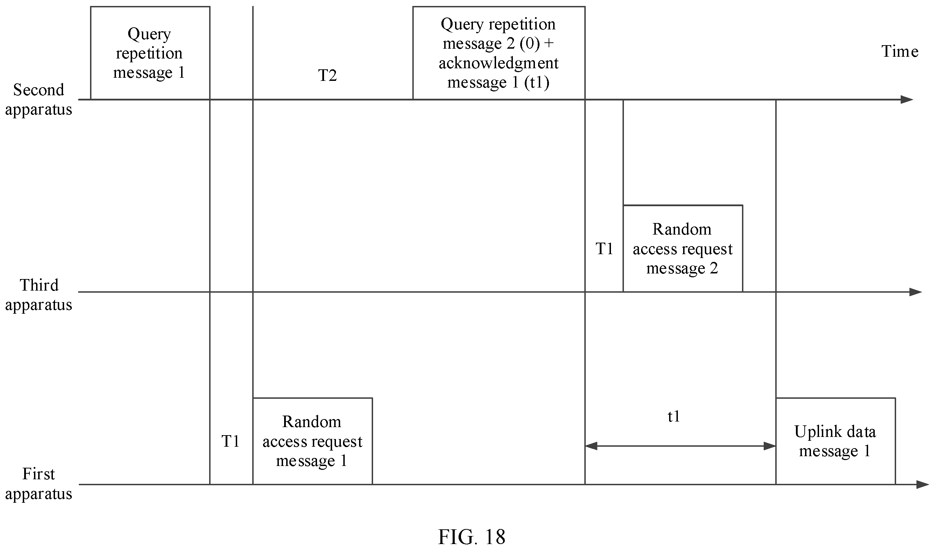

For example, FIG. 18 is still another timing diagram of a first apparatus, a second apparatus, and a third apparatus according to an embodiment of this application. A horizontal axis coordinate in FIG. 18 represents time. T1 is a processing duration for processing a downlink message (for example, the query repetition message 1; or the query repetition message 2 and the acknowledgment message 1) by the first apparatus and the third apparatus, and T2 is a processing duration for processing an uplink message (for example, the random access request message 1; the random access request message 2; or the uplink data message 1) by the second apparatus. The first duration indicated by the first time information included in the acknowledgment message 1 is t1, and the query repetition message 2 does not include any information. Therefore, it may be understood that the second duration indicated by the second time information included in the query repetition message 2 is 0. t1 is greater than T1. After receiving the acknowledgment message 1 and the query repetition message 2, the third apparatus sends the random access request message 2 to the second apparatus after the processing duration T1 for processing the downlink message (for example, the acknowledgment message 1 and the query repetition message 2). After receiving the acknowledgment message 1 and the query repetition message 2, the first apparatus sends the uplink data message 1 to the second apparatus after t1 (t1 includes the processing duration T1 for processing the downlink message (for example, the acknowledgment message 1 and the query repetition message 2)). That is, time at which the first apparatus sends the uplink data message 1 to the second apparatus is staggered from time at which the third apparatus sends the random access request message 2 to the second apparatus, thereby reducing a collision between the first apparatus and the third apparatus. In addition, because after receiving the random access request message 1, the second apparatus may send the acknowledgment message 1 and the query repetition message 2 together after the processing duration T2 for processing the random access request message 1, impact of T2 is reduced, and an access rate is improved.

Case E: The first downlink message and the second downlink message are a same message. The first downlink message is a query repetition message 1 used to trigger the access occasion of the first apparatus, and the second downlink message is an acknowledgment message 2 used to confirm successful access of the third apparatus.

Correspondingly, the first uplink message is a random access request message 1 used to request access of the first apparatus, and the second uplink message is an uplink data message 2 used to transmit uplink data of the third apparatus.

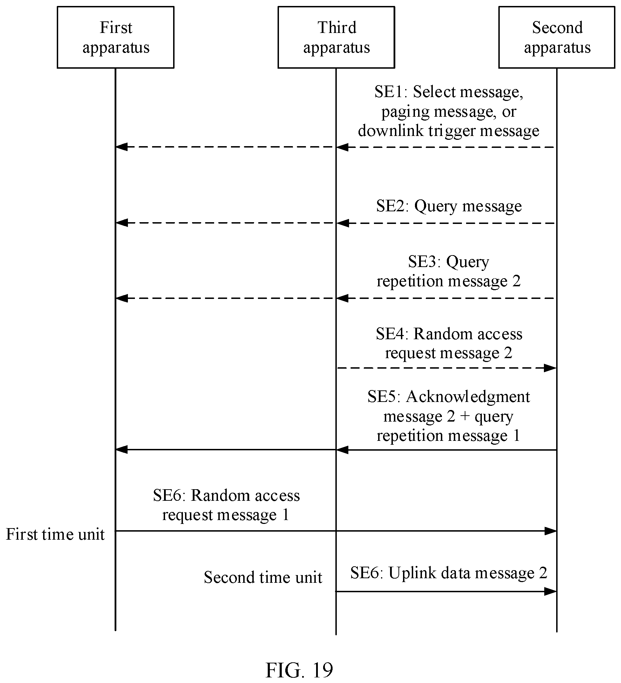

For example, FIG. 19 is a schematic flowchart of still another communication method according to an embodiment of this application. SE1 to SE4 are optional steps.

SE1: The second apparatus sends a select message, a paging message, or a downlink trigger message. Correspondingly, the first apparatus receives the select message, the paging message, or the downlink trigger message from the second apparatus, and the third apparatus receives the select message, the paging message, or the downlink trigger message from the second apparatus.

For SE1, refer to SA1. Details are not described herein again.

SE2: The second apparatus sends a query message. Correspondingly, the first apparatus receives the query message from the second apparatus, and the third apparatus receives the query message from the second apparatus.

For SE2, refer to SA2. Details are not described herein again. In SE2, an example in which neither an initial value of a counter of the first apparatus nor an initial value of a counter of the third apparatus is 0 is used.

SE3: The second apparatus sends a query repetition message 2. Correspondingly, the first apparatus receives the query repetition message 2 from the second apparatus, and the third apparatus receives the query repetition message 2 from the second apparatus.

The query repetition message 2 is used to trigger the access occasion of the third apparatus.

SE4: The third apparatus sends a random access request message 2 to the second apparatus. Correspondingly, the second apparatus receives the random access request message 2 from the third apparatus.

The random access request message 2 is used to request access of the third apparatus. The random access request message 2 may include the second identifier of the third apparatus.

SE5: The second apparatus sends the acknowledgment message 2 and the query repetition message 1 together. Correspondingly, the first apparatus receives the acknowledgment message 2 and the query repetition message 1 from the second apparatus, and the third apparatus receives the acknowledgment message 2 and the query repetition message 1 from the second apparatus.

The acknowledgment message 2 is used to confirm successful access of the third apparatus, and the query repetition message 1 is used to trigger the access occasion of the first apparatus.

The acknowledgment message 2 may include the second identifier of the third apparatus. The acknowledgment message 2 may further include but is not limited to one or more of the following: the second time information, the third time information, the first configuration information, and the first value. Optionally, the acknowledgment message 2 may be in a format of a MAC PDU. Optionally, the MAC PDU includes a character string arranged by bytes (8 bits), and the character string may be read in a left-to-right and top-to-bottom order.

For example, the acknowledgment message 2 may be in the format of the MAC PDU shown in Table 6, and the second time information is located after the second identifier. Therefore, after receiving the acknowledgment message 2 and the query repetition message 1, the third apparatus may determine the second time unit based on the fourth time unit (namely, a time unit in which the third apparatus receives the acknowledgment message 2 and the query repetition message 1) and the second duration indicated by the second time information located after the second identifier. After the first apparatus receives the acknowledgment message 2 and the query repetition message 1, because the query repetition message 1 does not include any information, the first apparatus may determine that the first duration indicated by the first time information is 0, and further determine the first time unit based on the third time unit (namely, a time unit in which the first apparatus receives the acknowledgment message 2 and the query repetition message 1) and the first duration indicated by the first time information.

For another example, the acknowledgment message 2 may be in the format of the MAC PDU shown in Table 8, and the third time information is located before the second identifier. Because the acknowledgment message 2 and the query repetition message 1 are sent together, the first apparatus and the third apparatus may determine that an order of receiving the acknowledgment message 2 and the query repetition message 1 is: the query repetition message 1 and the acknowledgment message 2. Therefore, after the first apparatus and the third apparatus receive the acknowledgment message 2 and the query repetition message 1, the third apparatus may determine, based on the third duration indicated by the third time information and the order in which the third apparatus receives the acknowledgment message 2 and the query repetition message 1, the second duration indicated by the second time information, and determine the second time unit based on the fourth time unit (namely, a time unit in which the third apparatus receives the acknowledgment message 2 and the query repetition message 1) and the second duration indicated by the second time information. The first apparatus may determine, based on the third duration indicated by the third time information and the order in which the first apparatus receives the acknowledgment message 2 and the query repetition message 1, the first duration indicated by the first time information, and determine the first time unit based on the third time unit (namely, a time unit in which the first apparatus receives the acknowledgment message 2 and the query repetition message 1) and the first duration indicated by the first time information.

It may be understood that, in this case, the first apparatus and the third apparatus do not determine, based on whether received acknowledgment messages correspond to the first apparatus and the third apparatus, whether access fails, but determine, based on whether the corresponding acknowledgment message is received within a preset duration, whether access fails. For example, the third apparatus first receives the acknowledgment message 1 corresponding to the first apparatus. After receiving the acknowledgment message 1, the third apparatus does not determine, based on that the acknowledgment message 1 is not an acknowledgment message corresponding to the third apparatus, that access fails, but continues to wait for a period of time. If the third apparatus fails to receive the acknowledgment message 2 corresponding to the third apparatus within the preset duration, the third apparatus determines that access fails.

SE6: The first apparatus sends the random access request message 1 to the second apparatus in the first time unit, and the third apparatus sends the uplink data message 2 to the second apparatus in the second time unit. Correspondingly, the second apparatus receives the random access request message 1 from the first apparatus in the first time unit, and receives the uplink data message 2 from the third apparatus in the second time unit.

The random access request message 1 is used to request access of the first apparatus, and the random access request message 2 includes the second identifier of the second apparatus. The uplink data message 2 is used to transmit the uplink data of the third apparatus, and the uplink data message 2 includes the EPC of the third apparatus.

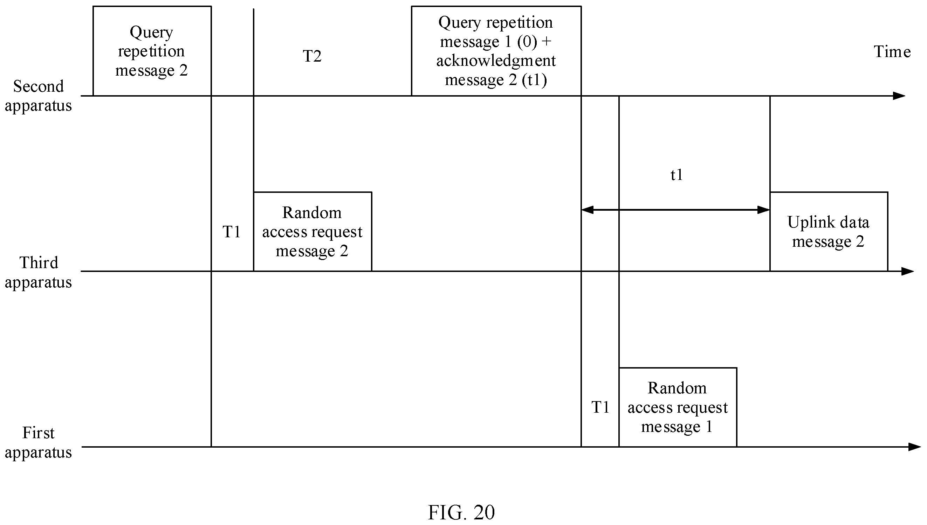

For example, FIG. 20 is still another timing diagram of a first apparatus, a second apparatus, and a third apparatus according to an embodiment of this application. A horizontal axis coordinate in FIG. 20 represents time. T1 is a processing duration for processing a downlink message (for example, the query repetition message 2; or the query repetition message 1 and the acknowledgment message 2) by the first apparatus and the third apparatus, and T2 is a processing duration for processing an uplink message (for example, the random access request message 2; the random access request message 1; or the uplink data message 2) by the second apparatus. The second duration indicated by the second time information included in the acknowledgment message 2 is t1, and the query repetition message 1 does not include any information. Therefore, it may be understood that the first duration indicated by the first time information included in the query repetition message 1 is 0. t1 is greater than T1. After receiving the acknowledgment message 2 and the query repetition message 1, the first apparatus sends the random access request message 1 to the second apparatus after the processing duration T1 for processing the downlink message (for example, the acknowledgment message 2 and the query repetition message 1). After receiving the acknowledgment message 2 and the query repetition message 1, the third apparatus sends the uplink data message 2 to the second apparatus after t1 (t1 includes the processing duration T1 for processing the downlink message (for example, the acknowledgment message 2 and the query repetition message 1)). That is, time at which the first apparatus sends the random access request message 1 to the second apparatus is staggered from time at which the third apparatus sends the uplink data message 2 to the second apparatus, thereby reducing a collision between the first apparatus and the third apparatus. In addition, because after receiving the random access request message 2, the second apparatus may send the acknowledgment message 2 and the query repetition message 1 together after the processing duration T2 for processing the random access request message 2, impact of T2 is reduced, and an access rate is improved.

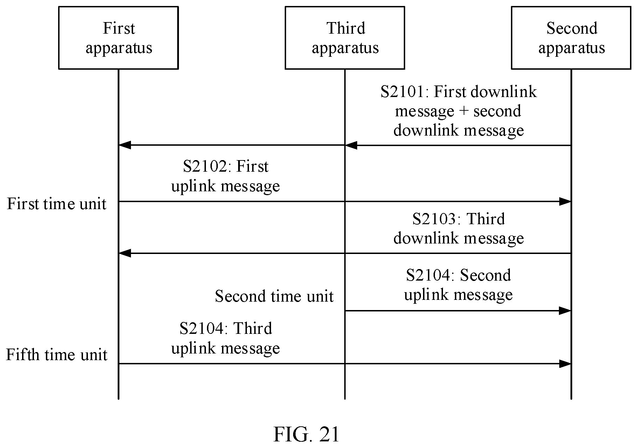

Embodiment 2: FIG. 21 is a schematic flowchart of still another communication method according to an embodiment of this application. In FIG. 21, the method is described from a perspective of interaction between the first apparatus, the second apparatus, and the third apparatus. It should be understood that, in this embodiment of this application, that the method is performed by the first apparatus, the second apparatus, and the third apparatus is merely used as an example, and the method is not limited to being performed by the first apparatus, the second apparatus, and the third apparatus. For example, the method in this embodiment of this application may alternatively be performed by more first apparatuses. When the more first apparatuses are involved, each of the more first apparatuses performs a same procedure. As shown in FIG. 21, a procedure of the communication method includes the following steps.

S2101: The second apparatus sends a first downlink message and a second downlink message. Correspondingly, the first apparatus receives the first downlink message and the second downlink message from the second apparatus, and the third apparatus receives the first downlink message and the second downlink message from the second apparatus.

In this embodiment of this application, the first downlink message may be used to confirm successful access of the first apparatus (or referred to as that contention resolution succeeds). The second downlink message may be used to confirm successful access of the third apparatus (or referred to as that contention resolution succeeds). The first downlink message may be associated with a first time unit, and the second downlink message may be associated with a second time unit.

For related content of the first downlink message, the second downlink message, the first time unit, and the second time unit in S2101, refer to the related content in S901. Details are not described herein again.

S2102: The first apparatus sends a first uplink message to the second apparatus in the first time unit. Correspondingly, the second apparatus receives the first uplink message from the first apparatus in the first time unit.

In this embodiment of this application, for related content of the first uplink message in S2102, refer to S902. Details are not described herein again.

S2103: The second apparatus sends a third downlink message. Correspondingly, the first apparatus receives the third downlink message from the second apparatus, and the third apparatus receives the third downlink message from the second apparatus.

In this embodiment of this application, the third downlink message may be used to transmit downlink data of the first apparatus, and the third downlink message may be associated with a fifth time unit. The fifth time unit is a time unit in which the first apparatus sends a third uplink message to the second apparatus. Optionally, that the fifth time unit is different from the second time unit may be understood as that there is no overlapping part between the fifth time unit and the second time unit. Optionally, the fifth time unit may be a time window, a period of time, or a time instant. This is not limited in embodiments of this application.

The first apparatus may determine, based on one or more of the following, the fifth time unit associated with the third downlink message.

### (1) Fourth time information.

The fourth time information may be carried in the third downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the third downlink message. Optionally, the fourth time information may be configured by a fourth apparatus for the second apparatus, and the fourth apparatus may be a near-real-time RIC and a non-real-time RIC in an ORAN system. For example, after determining the fourth time information based on historical data, the fourth apparatus sends the fourth time information to the second apparatus.

The fourth time information may indicate a fourth duration, or may indicate an index of a fourth duration. This is not limited in embodiments of this application. A unit of the fourth duration may be microsecond, second, millisecond, or the like. For example, the fourth duration is 10 µs. Alternatively, a unit of the fourth duration may be frame, subframe, superframe, slot, or the like. For example, the fourth duration is two slots. Alternatively, a unit of the fourth duration may be a quantity of times of receiving a downlink message similar to a synchronization signal. For example, the fourth duration is two receptions of a downlink message similar to a synchronization signal. This is not limited in embodiments of this application.

The first apparatus may determine the fifth time unit based on the fourth duration indicated by the fourth time information. Specifically, the first apparatus may determine the fifth time unit based on a sixth time unit and the fourth duration indicated by the fourth time information, where the sixth time unit is a time unit in which the first apparatus receives the third downlink message from the second apparatus. For example, if the fourth duration indicated by the fourth time information is T1, a duration between the sixth time unit and the fifth time unit is T1. Optionally, the sixth time unit may be a time window, a period of time, or a time instant. This is not limited in embodiments of this application.

Optionally, the fourth duration indicated by the fourth time information may be less than or equal to a processing duration of the first apparatus. The processing duration of the first apparatus may include but is not limited to one or more of the following: a duration for processing a downlink message by the first apparatus, where the duration is related to a length of the downlink message, and is generally several or tens of µs, for example, 15.625 µs; a duration for switching the first apparatus from a reception state to a transmission state, where the duration is generally several or tens of µs; and a duration for the first apparatus to perform an operation (for example, a read operation, a write operation, or a kill operation), where the duration is related to content of the downlink message.

Alternatively, the fourth duration indicated by the fourth time information may be greater than a processing duration of the first apparatus. Correspondingly, when determining the fifth time unit based on the sixth time unit and the fourth duration indicated by the fourth time information, the first apparatus needs to consider the processing duration of the first apparatus. For example, the fourth duration indicated by the fourth time information is T1, and the processing duration of the first apparatus is T2. If T2 is greater than T1, the duration between the sixth time unit and the fifth time unit is T1+T2 or T2.

### (2) Third time information.

The third time information may be (pre)configured, or may be defined in a standard, or may be agreed upon by the first apparatus, the second apparatus, and the third apparatus, or may be calculated according to a calculation formula that is satisfied by the third time information, or may be carried in the third downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the third downlink message.

The third time information may indicate a third duration, or may indicate an index of a third duration. This is not limited in embodiments of this application. A unit of the third duration may be microsecond, second, millisecond, or the like. For example, the third duration is 10 µs. Alternatively, a unit of the third duration may be frame, subframe, superframe, slot, or the like. For example, the third duration is two slots. Alternatively, a unit of the third duration may be a quantity of times of receiving a downlink message similar to a synchronization signal. For example, the third duration is two receptions of a downlink message similar to a synchronization signal. This is not limited in embodiments of this application.

The third time information may be related to first configuration information. The first configuration information may be used by the first apparatus to send an uplink message to the second apparatus, and may be used by the third apparatus to send an uplink message to the second apparatus. The first configuration information is related to a coverage level of the first apparatus and/or a coverage level of the third apparatus. For example, when the first apparatus is a terminal device having a function of a semi-passive tag, the coverage distance of the first apparatus is less than or equal to 37 meters, and the coverage level of the first apparatus is 0; or when the first apparatus is a terminal device having a function of a passive tag, the coverage distance of the first apparatus is less than or equal to 15 meters, and the coverage level of the first apparatus is 0. Configuration information corresponding to the coverage level 0 indicates that transmission time per bit is 1.5625 µs, a quantity of preamble bits is 8, and a quantity of postamble bits is 8. For example, the third duration indicated by the third time information may satisfy the following calculation formula: *x*/*t*₁ + *y* ∗ *t*₂ + *z*/*t*₃, where *x* is the quantity of preamble bits, *t*₁ is start symbol time of an uplink message, *y* is a bit length of the uplink message, *t*₂ is the transmission time per bit, *z* is the quantity of postamble bits, and *t*₃ is end symbol time of the uplink message. The uplink message may be the uplink message sent by the first apparatus to the second apparatus, or may be the uplink message sent by the third apparatus to the second apparatus.

### (3) Fourth value.

The fourth value may be (pre)configured, or may be defined in a standard, or may be agreed upon by the first apparatus, the second apparatus, and the third apparatus, or may be carried in the third downlink message, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the third downlink message.

The fourth value may be a maximum value of the fourth duration (or referred to as the duration between the sixth time unit and the fifth time unit) indicated by the fourth time information.

Specifically, if the fourth time information is carried in the third downlink message, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the third downlink message, the first apparatus may determine the third time information and the fourth value in the foregoing manner. Further, the first apparatus may determine the fifth time unit based on the third time information, a fifth value (for example, randomly generated by the first apparatus), and the sixth time unit, where the fifth value is less than or equal to the fourth value. For example, if the fourth value is 4, the third duration indicated by the third time information is T, and the fifth value randomly generated by the first apparatus is 1, the first apparatus may determine that the duration between the sixth time unit and the fifth time unit is T. It may be understood that the fourth time information is determined based on the third time information and the fifth value, and the fifth time unit is determined based on the fourth time information and the sixth time unit. Alternatively, the first apparatus may determine the fifth time unit based on a fifth value (for example, randomly generated by the first apparatus) and the sixth time unit, where the fifth value is less than or equal to the fourth value. For example, if the fourth value is 100 µs, and the fifth value randomly generated by the first apparatus is 50 µs, the first apparatus may determine that the duration between the sixth time unit and the fifth time unit is 50 µs. It may be understood that the fourth time information is determined based on the fifth value, and the fifth time unit is determined based on the fourth time information and the sixth time unit.

In a possible implementation, the third downlink message may include one or more of the following: the fourth time information, the third time information, and the fourth value. In this case, the first apparatus may determine, based on one or more of the information included in the third downlink message, the fifth time unit associated with the third downlink message.

In another possible implementation, the third downlink message may alternatively not include any one of the following information: the fourth time information, the third time information, and the fourth value. In this case, the third time information may be (pre)configured, or may be defined in a standard, or may be agreed upon by the first apparatus, the second apparatus, and the third apparatus, or may be calculated according to a calculation formula that is satisfied by the third time information, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the third downlink message. The fourth value may be (pre)configured, or may be defined in a standard, or may be agreed upon by the first apparatus, the second apparatus, and the third apparatus, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the third downlink message. Therefore, the first apparatus may determine, based on the third time information and the fifth value, the fourth duration indicated by the fourth time information, and determine the fifth time unit based on the sixth time unit and the fourth duration indicated by the fourth time information.

S2104: The third apparatus sends a second uplink message to the second apparatus in the second time unit, and the first apparatus sends the third uplink message to the second apparatus in the fifth time unit. Correspondingly, the second apparatus receives the second uplink message from the third apparatus in the second time unit, and receives the third uplink message from the first apparatus in the fifth time unit.

In this embodiment of this application, for related content of the second uplink message in S2104, refer to the related content in S902. Details are not described herein again. The third uplink message may be used to transmit uplink data of the first apparatus.

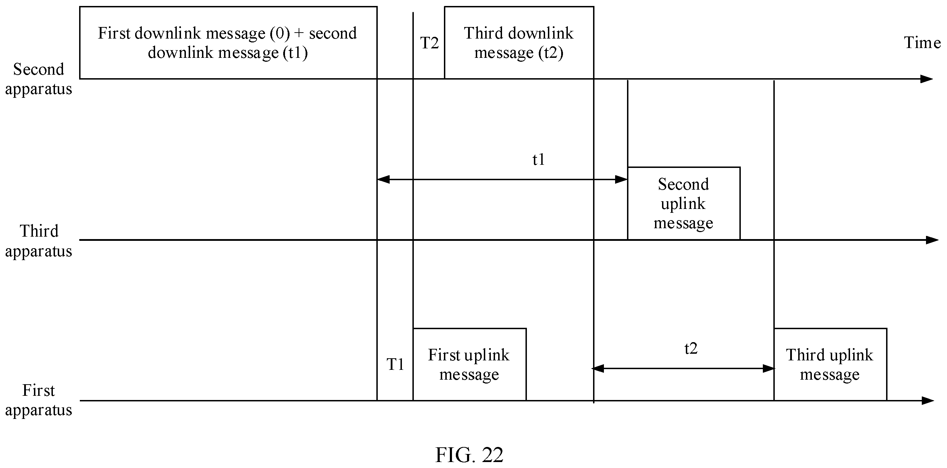

FIG. 22 is still another timing diagram of a first apparatus, a second apparatus, and a third apparatus according to an embodiment of this application. A horizontal axis coordinate in FIG. 22 represents time. T1 is a processing duration for processing a downlink message (for example, the first downlink message and the second downlink message; or the third downlink message) by the first apparatus and the third apparatus, and T2 is a processing duration for processing an uplink message (for example, the first uplink message; the second uplink message; or the third uplink message) by the second apparatus. A first duration indicated by first time information included in the first downlink message is 0, and a second duration indicated by second time information included in the second downlink message is t1. t1 is greater than T1. After receiving the first downlink message and the second downlink message, the first apparatus sends the first uplink message to the second apparatus after the processing duration T1 for processing the downlink message (for example, the first downlink message and the second downlink message). After receiving the first uplink message, the second apparatus sends the third downlink message after the processing duration T2 for processing the uplink message (for example, the first uplink message). The fourth duration indicated by the fourth time information included in the third downlink message is t2. t2 is greater than T1. After receiving the third downlink message, the first apparatus sends the third uplink message to the second apparatus after t2 (t2 includes the processing duration T1 for processing the downlink message (for example, the third downlink message)). After receiving the first downlink message and the second downlink message, the third apparatus sends the second uplink message to the second apparatus after t1 (t1 includes the processing duration T1 for processing the downlink message (for example, the first downlink message and the second downlink message)). That is, time at which the first apparatus sends the first uplink message to the second apparatus is staggered from time at which the third apparatus sends the second uplink message to the second apparatus, and time at which the first apparatus sends the third uplink message to the second apparatus is staggered from time at which the third apparatus sends the second uplink message to the second apparatus, thereby reducing a collision between the first apparatus and the third apparatus.

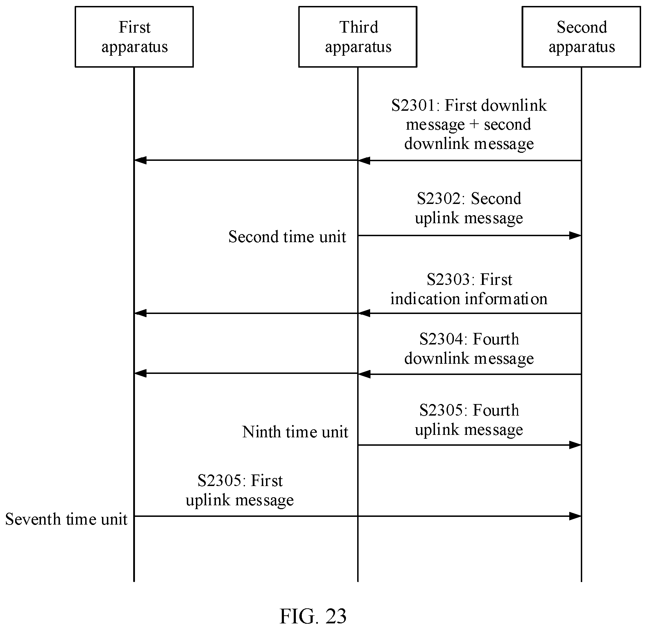

Embodiment 3: FIG. 23 is a schematic flowchart of still another communication method according to an embodiment of this application. In FIG. 23, the method is described from a perspective of interaction between the first apparatus, the second apparatus, and the third apparatus. It should be understood that, in this embodiment of this application, that the method is performed by the first apparatus, the second apparatus, and the third apparatus is merely used as an example, and the method is not limited to being performed by the first apparatus, the second apparatus, and the third apparatus. For example, the method in this embodiment of this application may alternatively be performed by more first apparatuses. When the more first apparatuses are involved, each of the more first apparatuses performs a same procedure. As shown in FIG. 23, a procedure of the communication method includes the following steps.

S2301: The second apparatus sends a first downlink message and a second downlink message. Correspondingly, the first apparatus receives the first downlink message and the second downlink message from the second apparatus, and the third apparatus receives the first downlink message and the second downlink message from the second apparatus.

The first downlink message may be used to confirm successful access of the first apparatus (or referred to as that contention resolution succeeds). The second downlink message may be used to confirm successful access of the third apparatus (or referred to as that contention resolution succeeds). The first downlink message may be associated with a first time unit, and the second downlink message may be associated with a second time unit.

For related content of the first downlink message, the second downlink message, the first time unit, and the second time unit in S2301, refer to the related content in S901. Details are not described herein again.

S2302: The third apparatus sends a second uplink message to the second apparatus in the second time unit. Correspondingly, the second apparatus receives the second uplink message from the third apparatus in the second time unit.

In this embodiment of this application, for related content of the second uplink message in S2302, refer to S902. Details are not described herein again.

S2303: The second apparatus sends first indication information. Correspondingly, the first apparatus receives the first indication information from the second apparatus, and the third apparatus receives the first indication information from the second apparatus.

In this embodiment of this application, the first indication information indicates that the first downlink message is not associated with the first time unit, and the first indication information may be associated with a seventh time unit. Optionally, that the seventh time unit is different from the first time unit may be understood as that there is no overlapping part between the seventh time unit and the first time unit. Optionally, that the seventh time unit is different from the second time unit may be understood as that there is no overlapping part between the seventh time unit and the second time unit. Optionally, the seventh time unit may be a time window, a period of time, or a time instant. This is not limited in embodiments of this application.

The first apparatus may determine, based on one or more of the following, the seventh time unit associated with the first indication information.

### (1) Fifth time information.

The fifth time information may be carried in the first indication information, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first indication information. Optionally, the fifth time information may be configured by a fourth apparatus for the second apparatus, and the fourth apparatus may be a near-real-time RIC and a non-real-time RIC in an ORAN system. For example, after determining the fifth time information based on historical data, the fourth apparatus sends the fifth time information to the second apparatus.

The fifth time information may indicate a fifth duration, or may indicate an index of a fifth duration. This is not limited in embodiments of this application. A unit of the fifth duration may be microsecond, second, millisecond, or the like. For example, the fifth duration is 10 µs. Alternatively, a unit of the fifth duration may be frame, subframe, superframe, slot, or the like. For example, the fifth duration is two slots. Alternatively, a unit of the fifth duration may be a quantity of times of receiving a downlink message similar to a synchronization signal. For example, the fifth duration is two receptions of a downlink message similar to a synchronization signal. This is not limited in embodiments of this application.

The first apparatus may determine the seventh time unit based on the fifth duration indicated by the fifth time information. Specifically, the first apparatus may determine the seventh time unit based on an eighth time unit and the fifth duration indicated by the fifth time information, where the eighth time unit is a time unit in which the first apparatus receives the first indication information from the second apparatus. For example, if the fifth duration indicated by the fifth time information is T1, a duration between the eighth time unit and the seventh time unit is T1.

Optionally, the fifth duration indicated by the fifth time information may be less than or equal to a processing duration of the first apparatus. The processing duration of the first apparatus may include but is not limited to one or more of the following: a duration for processing a downlink message by the first apparatus, where the duration is related to the length of the downlink message, and is generally several or tens of µs, for example, 15.625 µs; a duration for switching the first apparatus from a reception state to a transmission state, where the duration is generally several or tens of µs; and a duration for the first apparatus to perform an operation (for example, a read operation, a write operation, or a kill operation), where the duration is related to the content of the downlink message.

Alternatively, the fifth duration indicated by the fifth time information may be greater than a processing duration of the first apparatus. Correspondingly, when determining the seventh time unit based on the eighth time unit and the fifth duration indicated by the fifth time information, the first apparatus needs to consider the processing duration of the first apparatus. For example, the fifth duration indicated by the fifth time information is T1, and the processing duration of the first apparatus is T2. If T2 is greater than T1, the duration between the eighth time unit and the seventh time unit is T1+T2 or T2.

### (2) Third time information.

The third time information may be (pre)configured, or may be defined in a standard, or may be agreed upon by the first apparatus, the second apparatus, and the third apparatus, or may be calculated according to a calculation formula that is satisfied by the third time information, or may be carried in the first indication information, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first indication information.

The third time information may indicate a third duration, or may indicate an index of a third duration. This is not limited in embodiments of this application. A unit of the third duration may be microsecond, second, millisecond, or the like. For example, the third duration is 10 µs. Alternatively, a unit of the third duration may be frame, subframe, superframe, slot, or the like. For example, the third duration is two slots. Alternatively, a unit of the third duration may be a quantity of times of receiving a downlink message similar to a synchronization signal. For example, the third duration is two receptions of a downlink message similar to a synchronization signal. This is not limited in embodiments of this application.

The third time information may be related to first configuration information. The first configuration information may be used by the first apparatus to send an uplink message to the second apparatus, and may be used by the third apparatus to send an uplink message to the second apparatus. The first configuration information is related to a coverage level of the first apparatus and/or a coverage level of the third apparatus. For example, when the first apparatus is a terminal device having a function of a semi-passive tag, the coverage distance of the first apparatus is less than or equal to 37 meters, and the coverage level of the first apparatus is 0; or when the first apparatus is a terminal device having a function of a passive tag, the coverage distance of the first apparatus is less than or equal to 15 meters, and the coverage level of the first apparatus is 0. Configuration information corresponding to the coverage level 0 indicates that transmission time per bit is 1.5625 µs, a quantity of preamble bits is 8, and a quantity of postamble bits is 8. For example, the third duration indicated by the third time information may satisfy the following calculation formula: *x*/*t*₁ + *y* ∗ *t*₂ + *z*/*t*₃, where *x* is the quantity of preamble bits, *t*₁ is start symbol time of an uplink message, *y* is a bit length of the uplink message, *t*₂ is the transmission time per bit, *z* is the quantity of postamble bits, and *t*₃ is end symbol time of the uplink message. The uplink message may be the uplink message sent by the first apparatus to the second apparatus, or may be the uplink message sent by the third apparatus to the second apparatus.

### (3) Sixth value.

The sixth value may be (pre)configured, or may be defined in a standard, or may be agreed upon by the first apparatus, the second apparatus, and the third apparatus, or may be carried in the first indication information, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first indication information.

The sixth value may be a maximum value of the fifth duration (or referred to as the duration between the eighth time unit and the seventh time unit) indicated by the fifth time information.

Specifically, if the fifth time information is carried in the first indication information, and is not carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first indication information, the first apparatus may determine the third time information and the sixth value in the foregoing manner. Further, the first apparatus may determine the seventh time unit based on the third time information, a seventh value (for example, randomly generated by the first apparatus), and the eighth time unit, where the seventh value is less than or equal to the sixth value. For example, if the sixth value is 4, the third duration indicated by the third time information is T, and the seventh value randomly generated by the first apparatus is 1, the first apparatus may determine that the duration between the eighth time unit and the seventh time unit is T. It may be understood that the fifth time information is determined based on the third time information and the seventh value, and the seventh time unit is determined based on the fifth time information and the eighth time unit. Alternatively, the first apparatus may determine the seventh time unit based on a seventh value (for example, randomly generated by the first apparatus) and the eighth time unit, where the seventh value is less than or equal to the sixth value. For example, if the sixth value is 100 µs, and the seventh value randomly generated by the first apparatus is 50 µs, the first apparatus may determine that the duration between the eighth time unit and the seventh time unit is 50 µs. It may be understood that the fifth time information is determined based on the seventh value, and the seventh time unit is determined based on the fifth time information and the eighth time unit.

In a possible implementation, the first indication information may include one or more of the following: the fifth time information, the third time information, and the sixth value. In this case, the first apparatus may determine, based on one or more of the information included in the first indication information, the seventh time unit associated with the first indication information.

In another possible implementation, the first indication information may alternatively not include any one of the following information: the fifth time information, the third time information, and the sixth value. In this case, the third time information may be (pre)configured, or may be defined in a standard, or may be agreed upon by the first apparatus, the second apparatus, and the third apparatus, or may be calculated according to a calculation formula that is satisfied by the third time information, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first indication information. The sixth value may be (pre)configured, or may be defined in a standard, or may be agreed upon by the first apparatus, the second apparatus, and the third apparatus, or may be carried in an acknowledgment message (or referred to as a random access request response message, or referred to as a random access identification response message), a select message, a paging message, a query message (or referred to as an access round trigger/indication message) or a query repetition message (or referred to as an access occasion trigger/indication message), a downlink trigger message, a synchronization message, or a system message that is not used as the first indication information. Therefore, the first apparatus may determine, based on the third time information and the seventh value, the fifth duration indicated by the fifth time information, and determine the seventh time unit based on the eighth time unit and the fifth duration indicated by the fifth time information.

S2304: The second apparatus sends a fourth downlink message. Correspondingly, the first apparatus receives the fourth downlink message from the second apparatus, and the third apparatus receives the fourth downlink message from the second apparatus.

In this embodiment of this application, the fourth downlink message is used to transmit downlink data of the third apparatus.

S2305: The third apparatus sends a fourth uplink message to the second apparatus in a ninth time unit, and the first apparatus sends a first uplink message to the second apparatus in the seventh time unit. Correspondingly, the second apparatus receives the fourth uplink message from the third apparatus in the ninth time unit, and receives the first uplink message from the first apparatus in the fifth time unit.

In this embodiment of this application, for related content of the first uplink message in S2305, refer to the related content in S902. Details are not described herein again. The fourth uplink message is used to transmit uplink data of the third apparatus. That the seventh time unit is different from the ninth time unit may be understood as that there is no overlapping part between the seventh time unit and the ninth time unit.

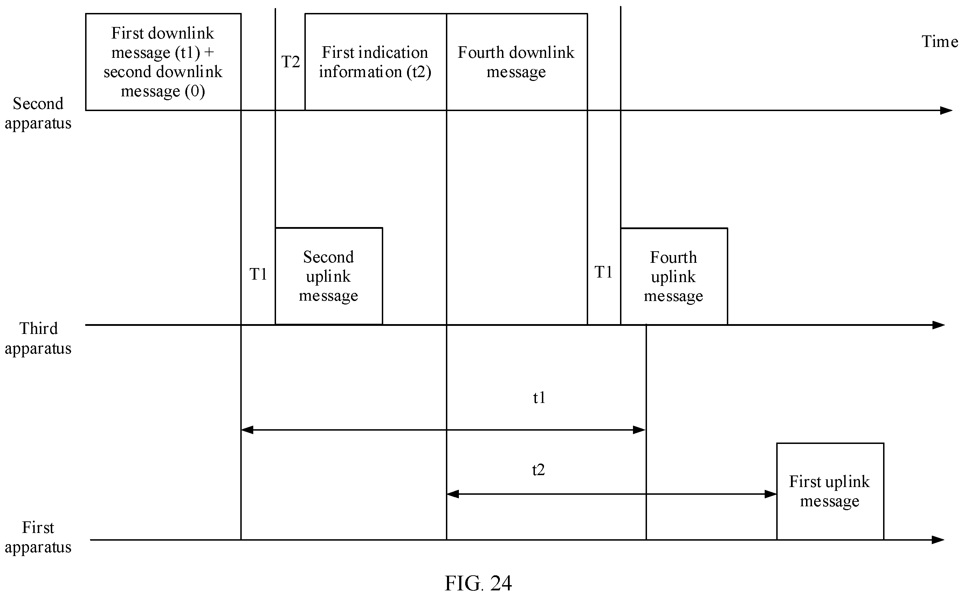

FIG. 24 is still another timing diagram of a first apparatus, a second apparatus, and a third apparatus according to an embodiment of this application. A horizontal axis coordinate in FIG. 24 represents time. T1 is a processing duration for processing a downlink message (for example, the first downlink message and the second downlink message; the first indication information; or the fourth downlink message) by the first apparatus and the third apparatus, and T2 is a processing duration for processing an uplink message (for example, the second uplink message) by the second apparatus. A first duration indicated by first time information included in the first downlink message is t1, and a second duration indicated by second time information included in the second downlink message is 0. t1 is greater than T1. After receiving the first downlink message and the second downlink message, the third apparatus sends the second uplink message to the second apparatus after the processing duration T1 for processing the downlink message (for example, the first downlink message and the second downlink message). After receiving the second uplink message, the second apparatus separately sends the first indication message and the fourth downlink message after the processing duration T2 for processing the uplink message (for example, the second uplink message). The fifth duration indicated by the fifth time information included in the first indication information is t2. t2 is greater than T1. Originally, after receiving the first downlink message and the second downlink message, the first apparatus needs to send the first uplink message to the second apparatus after t1 (t1 includes the processing duration T1 for processing the downlink message (for example, the first downlink message and the second downlink message)). However, the first apparatus receives the first indication message within t1. Therefore, after receiving the first indication message, the first apparatus sends the first uplink message to the second apparatus after t2 (t2 includes the processing duration T1 for processing the downlink message (for example, the first indication information)). After receiving the fourth downlink message, the third apparatus sends the fourth uplink message to the second apparatus after the processing duration T1 for processing the downlink message (for example, the fourth downlink message). That is, time at which the first apparatus sends the first uplink message to the second apparatus is staggered from time at which the third apparatus sends the second uplink message to the second apparatus, and the time at which the first apparatus sends the first uplink message to the second apparatus is staggered from time at which the third apparatus sends the fourth uplink message to the second apparatus, thereby reducing a collision between the first apparatus and the third apparatus.

It may be understood that the foregoing embodiments of this application may be separately implemented, or may be combined with each other. This is not limited in embodiments of this application.

The foregoing describes the methods provided in embodiments of this application with reference to the accompanying drawings. The following describes apparatuses provided in embodiments of this application with reference to the accompanying drawings.

Based on a same technical concept, an embodiment of this application provides a communication apparatus. The apparatus includes modules/units/means configured to perform the methods performed by the devices in the foregoing method embodiments. The modules/units/means may be implemented by software, may be implemented by hardware, or may be implemented by hardware executing corresponding software.

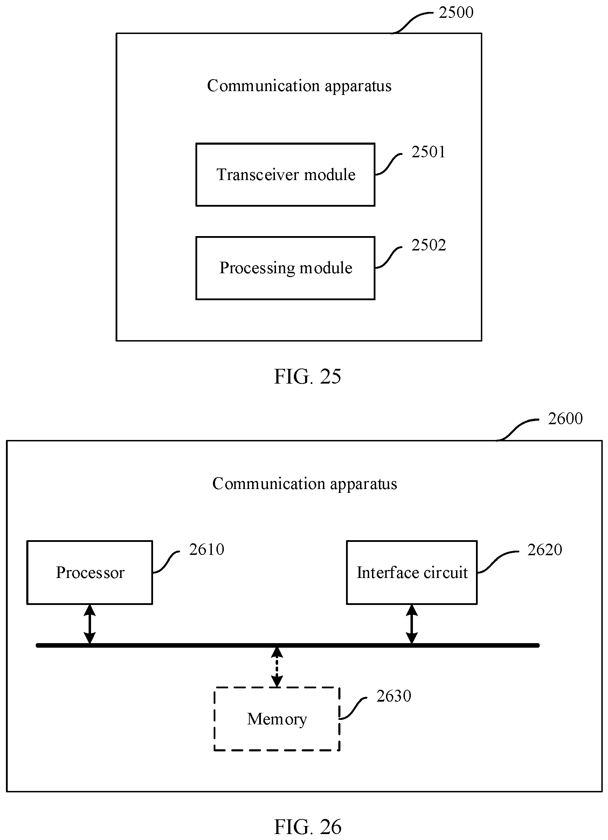

For example, FIG. 25 is a diagram of a communication apparatus. An apparatus 2500 includes a transceiver module 2501 and a processing module 2502.

When the apparatus 2500 is the first apparatus, functions of the modules in the apparatus 2500 are as follows.

The transceiver module 2501 is configured to: receive a first downlink message and a second downlink message from a second apparatus, where the first downlink message is used to confirm successful access of the first apparatus or to trigger an access occasion of the first apparatus, the second downlink message is used to confirm successful access of a third apparatus or to trigger an access occasion of the third apparatus, the first downlink message is associated with a first time unit, the second downlink message is associated with a second time unit, and the second time unit is a time unit in which the third apparatus sends a second uplink message to the second apparatus; and send a first uplink message to the second apparatus in the first time unit.

Alternatively, when the apparatus 2500 is the second apparatus, functions of the modules in the apparatus 2500 are as follows.

The transceiver module 2501 is configured to: send a first downlink message and a second downlink message, where the first downlink message is used to confirm successful access of a first apparatus or to trigger an access occasion of the first apparatus, the second downlink message is used to confirm successful access of a third apparatus or to trigger an access occasion of the third apparatus, the first downlink message is associated with a first time unit, and the second downlink message is associated with a second time unit; and receive a first uplink message from the first apparatus in the first time unit, and receive a second uplink message from the third apparatus in the second time unit.

During specific implementation, the apparatus 2500 may have a plurality of product forms. The following describes several possible product forms.

FIG. 26 is a diagram of another communication apparatus. A communication apparatus 2600 includes a processor 2610 and an interface circuit 2620. The interface circuit 2620 is configured to: receive a signal from a communication apparatus other than the communication apparatus and transmit the signal to the processor 2610, or send a signal from the processor 2610 to a communication apparatus other than the communication apparatus. The processor 2610 is configured to implement, via a logic circuit or by executing instructions, the method performed by the first apparatus or the second apparatus in the foregoing method embodiments.

The processor 2610 and the interface circuit 2620 are coupled to each other. It may be understood that the interface circuit 2620 may be a transceiver or an input/output interface. Optionally, the communication apparatus 2600 may further include a memory 2630, configured to: store instructions executed by the processor 2610, or store input data required by the processor 2610 to run instructions, or store data generated by running instructions by the processor 2610.

When the communication apparatus is a module used in the first apparatus or the second apparatus, the module implements functions of the first apparatus or the second apparatus in the foregoing method embodiments. The module receives information from another module (for example, a radio frequency module or an antenna) in the first apparatus or the second apparatus, where the information is sent by the second apparatus to the first apparatus or sent by the first apparatus to the second apparatus. Alternatively, the module sends information to another module (for example, a radio frequency module or an antenna) in the first apparatus or the second apparatus, where the information is sent by the second apparatus to the first apparatus or sent by the first apparatus to the second apparatus.

It should be understood that the processor mentioned in embodiments of this application may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should be noted that the memory described in this specification is intended to include but is not limited to these memories and any memory of another appropriate type.

Based on a same technical concept, an embodiment of this application further provides a computer-readable storage medium. The storage medium stores a computer program or instructions. When the computer program or the instructions are executed by a processor, the method performed by the first apparatus or the second apparatus in the foregoing method embodiments is implemented.

Based on a same technical concept, an embodiment of this application further provides a computer program product, including a computer program or instructions. When the computer program or the instructions are executed by a processor, the method performed by the first apparatus or the second apparatus in the foregoing method embodiments is implemented.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, applied to a first apparatus, wherein the method comprises:
receiving a first downlink message and a second downlink message from a second apparatus, wherein the first downlink message is used to confirm successful access of the first apparatus or to trigger an access occasion of the first apparatus, the second downlink message is used to confirm successful access of a third apparatus succeeds or to trigger an access occasion of the third apparatus, the first downlink message is associated with a first time unit, the second downlink message is associated with a second time unit, and the second time unit is a time unit in which the third apparatus sends a second uplink message to the second apparatus; and
sending a first uplink message to the second apparatus in the first time unit.

2. The method according to claim 1, wherein the first downlink message and the second downlink message comprise one or more of the following:
first time information, wherein the first time information is used to determine the first time unit;
second time information, wherein the first time information is used to determine the second time unit;
third time information, wherein the third time information is related to first configuration information, and the first configuration information is used by the first apparatus to send an uplink message to the second apparatus and used by the third apparatus to send an uplink message to the second apparatus;
the first configuration information, wherein the first configuration information is used by the first apparatus to send the uplink message to the second apparatus and used by the third apparatus to send the uplink message to the second apparatus; and
a first value, wherein the first value is a maximum value of a first duration indicated by the first time information and a maximum value of a second duration indicated by the second time information.

3. The method according to claim 1 or 2, wherein the method further comprises:
determining the first time information based on the third time information or the first configuration information and an order in which the first apparatus receives the first downlink message and the second downlink message from the second apparatus, wherein the third time information is related to the first configuration information, and the first configuration information is used by the first apparatus to send the uplink message to the second apparatus; and
determining the first time unit based on the first time information.

4. The method according to any one of claims 1 to 3, wherein the method further comprises:
determining the first time information based on the third time information or the first configuration information and a second value, wherein the third time information is related to the first configuration information, the first configuration information is used by the first apparatus to send the uplink message to the second apparatus, the second value is less than or equal to the first value, and the first value is the maximum value of the first duration indicated by the first time information; and
determining the first time unit based on the first time information.

5. The method according to claim 3 or 4, wherein determining the first time unit based on the first time information comprises:
determining the first time unit based on the first time information and a third time unit, wherein the third time unit is a time unit in which the first apparatus receives the first downlink message from the second apparatus or a time unit in which the first apparatus receives the first downlink message and the second downlink message from the second apparatus.

6. The method according to any one of claims 1 to 5, wherein the first downlink message is used to confirm successful access of the first apparatus, and the first uplink message is used to transmit uplink data of the first apparatus; or
the first downlink message is used to trigger the access occasion of the first apparatus, and the first uplink message is used to request access of the first apparatus.

7. The method according to any one of claims 1 to 6, wherein the second downlink message is used to confirm successful access of the third apparatus, and the second uplink message is used to transmit uplink data of the third apparatus; or
the second downlink message is used to trigger the access occasion of the third apparatus, and the second uplink message is used to request access of the third apparatus.

8. The method according to any one of claims 1 to 7, wherein the first downlink message and the second downlink message are a same message.

9. The method according to any one of claims 1 to 8, wherein the first downlink message and the second downlink message comprise one or more of the following:
a number of a first process, wherein the number of the first process is associated with the first apparatus; and
a number of a second process, wherein the number of the second process is associated with the third apparatus.

10. A communication method, applied to a second apparatus, wherein the method comprises:
sending a first downlink message and a second downlink message, wherein the first downlink message is used to confirm successful access of a first apparatus or to trigger an access occasion of the first apparatus, the second downlink message is used to confirm successful access of a third apparatus or to trigger an access occasion of the third apparatus, the first downlink message is associated with a first time unit, and the second downlink message is associated with a second time unit; and
receiving a first uplink message from the first apparatus in the first time unit, and receiving a second uplink message from the third apparatus in the second time unit.

11. The method according to claim 10, wherein the first downlink message and the second downlink message comprise one or more of the following:
the first time information, wherein the first time information is used to determine the first time unit;
the second time information, wherein the first time information is used to determine the second time unit;
third time information, wherein the third time information is related to first configuration information, and the first configuration information is used by the first apparatus to send an uplink message to the second apparatus and used by the third apparatus to send an uplink message to the second apparatus;
the first configuration information, wherein the first configuration information is used by the first apparatus to send the uplink message to the second apparatus and used by the third apparatus to send the uplink message to the second apparatus; and
a first value, wherein the first value is a maximum value of a first duration indicated by the first time information and a maximum value of a second duration indicated by the second time information.

12. The method according to claim 10 or 11, wherein the method further comprises:
the third time information or the first configuration information and an order in which the first apparatus receives the first downlink message and the second downlink message from the second apparatus are used to determine the first time information, and the third time information or the first configuration information and an order in which the third apparatus receives the first downlink message and the second downlink message from the second apparatus are used to determine the second time information; and
the third time information is related to the first configuration information, the first configuration information is used by the first apparatus to send the uplink message to the second apparatus, the first time information is used to determine the first time unit, and the second time information is used to determine the second time unit.

13. The method according to any one of claims 10 to 12, wherein the method further comprises:
the third time information or the first configuration information and a second value are used to determine the first time information, and the third time information or the first configuration information and a third value are used to determine the second time information; and
the third time information is related to the first configuration information, the first configuration information is used by the first apparatus to send the uplink message to the second apparatus, the second value is less than or equal to the first value, the third value is less than or equal to the first value, the first value is the maximum value of the first duration indicated by the first time information, the first time information is used to determine the first time unit, and the second time information is used to determine the second time unit.

14. The method according to claim 12 or 13, wherein the first time information and a third time unit are used to determine the first time unit, and the second time information and a fourth time unit are used to determine the second time unit; and
the third time unit is a time unit in which the first apparatus receives the first downlink message from the second apparatus or a time unit in which the first apparatus receives the first downlink message and the second downlink message from the second apparatus, and the fourth time unit is a time unit in which the third apparatus receives the second downlink message from the second apparatus or a time unit in which the third apparatus receives the first downlink message and the second downlink message from the second apparatus.

15. The method according to any one of claims 10 to 14, wherein the first downlink message is used to confirm successful access of the first apparatus, and the first uplink message is used to transmit uplink data of the first apparatus; or
the first downlink message is used to trigger the access occasion of the first apparatus, and the first uplink message is used to request access of the first apparatus.

16. The method according to any one of claims 10 to 15, wherein the second downlink message is used to confirm successful access of the third apparatus, and the second uplink message is used to transmit uplink data of the third apparatus; or
the second downlink message is used to trigger the access occasion of the third apparatus, and the second uplink message is used to request access of the third apparatus.

17. The method according to any one of claims 10 to 16, wherein the first downlink message and the second downlink message are a same message.

18. The method according to any one of claims 10 to 17, wherein the first downlink message and the second downlink message comprise one or more of the following:
a number of a first process, wherein the number of the first process is associated with the first apparatus; and
a number of a second process, wherein the number of the second process is associated with the third apparatus.

19. A communication method, applied to a communication system, wherein the method comprises:
performing, by a first apparatus, the method according to any one of claims 1 to 9; and
performing, by a second apparatus, the method according to any one of claims 10 to 18.

20. A communication system, wherein the communication system comprises a first apparatus and a second apparatus, the first apparatus is configured to implement the method according to any one of claims 1 to 9, and the second apparatus is configured to implement the method according to any one of claims 10 to 18.

21. A communication apparatus, comprising a module configured to perform the method according to any one of claims 1 to 9, or a module configured to perform the method according to any one of claims 10 to 18.

22. A communication apparatus, comprising a processor and an interface circuit, wherein the interface circuit is configured to: receive a signal from a communication apparatus other than the communication apparatus and transmit the signal to the processor, send a signal from the processor to a communication apparatus other than the communication apparatus; and the processor is configured to implement the method according to any one of claims 1 to 9 or the method according to any one of claims 10 to 18 via a logic circuit or by executing code instructions.

23. A communication apparatus, comprising:
a memory, configured to store a computer program; and
a processor, configured to invoke the computer program from the memory and run the computer program, to implement the method according to any one of claims 1 to 9, or implement the method according to any one of claims 10 to 18.

24. A chip system, comprising:
a memory, configured to store a computer program; and
a processor, configured to invoke the computer program from the memory and run the computer program, to enable a device on which the chip system is installed to perform the method according to any one of claims 1 to 9, or perform the method according to any one of claims 10 to 18.

25. A computer program product, comprising a computer program, wherein when the computer program is executed by a communication apparatus, the method according to any one of claims 1 to 9 is implemented, or the method according to any one of claims 10 to 18 is implemented.

26. A computer-readable storage medium, wherein the storage medium stores a computer program or instructions, and when the computer program or the instructions are executed by a communication apparatus, the method according to any one of claims 1 to 9 is implemented, or the method according to any one of claims 10 to 18 is implemented.
